# EUROPÄISCHE PATENTSCHRIFT

(11) **EP 1 820 354 B1**
(45) Veröffentlichungstag und Bekanntmachung des Hinweises auf die Patenterteilung: **15.02.2017**
(21) Anmeldenummer: 05849787.6
(22) Anmeldetag: 08.12.2005
(51) Int. Cl.: H04N 13/04

(54) **VERFAHREN ZUR AUTOSTEREOSKOPISCHEN ERZEUGUNG VON DREIDIMENSIONALEN BILDINFORMATIONEN AUS GERASTERTEN SUBPIXELAUSZ]GEN UND ANORDNUNG ZUR VERFAHRENSDURCHF]HRUNG**
METHOD FOR AUTOSTEREOSCOPICALLY PRODUCING THREE-DIMENSIONAL IMAGE INFORMATION FROM SCANNED SUB-PIXEL EXTRACTS AND DEVICE FOR CARRYING OUT SAID METHOD
PROCEDE DE PRODUCTION AUTOSTEREOSCOPIQUE D'INFORMATIONS D'IMAGES EN TROIS DIMENSIONS A PARTIR D'EXTRAITS DE SOUS-PIXELS TRAMES ET DISPOSITIF PERMETTANT LA MISE EN OEUVRE DUDIT PROCEDE

(30) Priorität: 11.12.2004 DE 102004059729
(43) Veröffentlichungstag der Anmeldung: 22.08.2007
(73) Patentinhaber: Fraunhofer-Gesellschaft zur Förderung der angewandten Forschung e.V., 80686 München (DE)
(72) Erfinder: DE LA BARRE, René, 09648 Mittweida (DE); PASTOOR, Siegmund, 10823 Berlin (DE)
(74) Vertreter: Pfenning, Meinig & Partner mbB
(86) Internationale Anmeldenummer: PCT/DE2005/002220
(87) Internationale Veröffentlichungsnummer: WO 2006/069555

(56) Entgegenhaltungen:
- EP-A- 0 791 847
- US-B1- 6 307 585
- STEROSCOPIC DISPLAYS AND VIRTUAL REALITY SYSTEMS XI 19-22 JAN. 2004 SAN JOSE, CA, USA, Bd. 5291, Nr. 1, Mai 2004 (2004-05), Seiten 265-272, XP002377833 Proceedings of the SPIE - The International Society for Optical Engineering SPIE-Int. Soc. Opt. Eng USA ISSN: 0277-786X in der Anmeldung erwähnt

## Beschreibung

Die Erfindung bezieht sich auf ein Verfahren zur autostereoskopischen Erzeugung von dreidimensionalen Bildinformationen aus gerasterten Subpixelauszügen aus zumindest einer rechten und einer linken Bildansicht auf einem farbzugeordnete Subpixel in Bildzeilen aufweisenden Matrixbildschirm mit einem optischen Trennraster, bei dem die Periodizität der Trennelemente in horizontaler Richtung a) vier oder b) sechs Subpixeln entspricht und die Trennelemente mit einem dem kleinen Seitenverhältnis der Subpixel entsprechenden Anstieg schräg zur Matrix des Bildschirms verlaufen, und auf eine Anordnung zur Verfahrensdurchführung.

### Stand der Technik

Bei den autostereoskopischen Darstellungsverfahren, die beispielsweise für die Informations- und Kommunikationstechnik, die Medizintechnik und die Computer- und Videotechnik sowohl im öffentlichen und als auch im privaten Bereich vielfältig einsetzbar sind, wird der gesamte Aufwand der augenrichtigen Stereoseparation im Verfahren und im umsetzenden System selbst geleistet; zusätzliche nutzergebundene Hardware, beispielsweise Brillen, werden nicht benötigt, wodurch sich der Nutzerkomfort wesentlich erhöht. Das Prinzip der autostereoskopischen Darstellungsverfahren (vergleiche beispielsweise die **Veröffentlichung I** von S. Pastoor "3D-Displays: Methoden und Stand der Technik", Handbuch der Telekommunikation, Band 4, Kapitel 4, Ergänzungslieferung Juni 2002, Fachverlag Deutscher Wirtschaftsdienst GmbH & Co KG, Köln, ISBN 3-87156-096-0) beruht auf einer Rasterung verschiedener Bildansichten auf einem Bildschirm und einer optischen Trennung dieser gerasterten Ansichten in Richtung auf die Augen eines Betrachters, sodass von jedem Auge immer nur Anteile einer einzigen Bildansicht in einem optischem Zusammenhang erfasst und gemeinsam zu einer perspektivischen Ansicht zusammengefügt werden. Das Trennraster weist dazu viele benachbart angeordnete Trennelemente, beispielsweise Schlitze, Zylinderlinsen oder Prismen, auf. Je nach Anzahl der dargestellten diskreten Bildansichten kann eine Stereoansicht mit einer Einzelperspektive (zwei diskrete Bildansichten, die üblicherweise im Augenabstand aufgenommen werden) oder eine Parallaxansicht mit mehreren Einzelperspektiven (drei und mehr diskrete benachbarte Bildansichten) erzeugt werden. Während bei der Stereoansicht eine relativ starre Betrachtungsposition oder ein optisches Nachführen der Bildausgabe erforderlich ist, um autostereoskopisches Sehen zu ermöglichen, bedingt bei der Parallaxansicht eine Kopfbewegung das Erreichen einer anderen Einzelperspektive. Die Betrachtungszonen für die Einzelperspektiven grenzen dabei vorzugsweise nahtlos aneinander. Bei bekannten Verfahren mit Parallaxwiedergabe reduziert das auftretende Übersprechen allerdings die nutzbare Bildtiefe. Mit zunehmender Bildtiefe (Disparität) steigt die Sichtbarkeit und Störwirkung des Übersprechens. Bei der Ausführung des Matrixbildschirms als Direktsichtbildschirm reduziert sich die für N Einzelperspektiven zur Verfügung stehende Pixelzahl auf 1/N der Pixel des verwendeten Matrixbildschirms. Bei handelsüblichen Flachbildschirmen (LCDs, Plasma-Display, OLEDs, etc.) besteht jedes Pixel aus drei Subpixeln der Farben Rot, Grün und Blau, die in ihrem Intensitätswert angesteuert werden können.

Zur Vermeidung von Abtasteffekten und zur Erzielung einer annähernd symmetrischen Auflösung in horizontaler und vertikaler Bildschirmrichtung kann das optische Trennraster bei dieser Art von Bildschirm deshalb unter einem Winkel zum Pixelraster gedreht angebracht werden ("Slanted-Raster-Methode", vergleiche beispielsweise WO 99/05559 A1 oder **Veröffentlichung II** von van Berkel et al.: "Characterisation and Optimisation of 3D-LCD-Module Design", Proc SPIE vol 3012 pp 179-187,1997). Ein grundsätzlicher Nachteil dieses Ansatzes ist jedoch neben der stark reduzierten Einzelbildauflösung die Tatsache, dass die Einzelperspektiven nicht perfekt getrennt werden können. Dieses Übersprechen der benachbarten Stereokanäle beeinträchtigt den räumlichen Eindruck und mindert die Bildqualität durch beispielsweise Unschärfen, Mehrfachkonturen, Kontrastminderung und Farbfehler.

Um eine größtmögliche Bildqualität mit einer hohen Bildauflösung für einen einzelnen Betrachter zu erzielen, wurden zweikanalige ("Stereokanal", Rasterung einer linken und einer rechten Bildansicht) autostereoskopische Verfahren beschrieben, die mit mechanischen und/oder elektronischen Mitteln die Betrachtungszonen auf dem Bildschirm an die momentane Position der Augen des Betrachters anpassen ("Trackingverfahren", vergleiche beispielsweise EP 0 354 851 A2). Die Augen- bzw. Pupillenposition oder ein anderes Kopf- oder Augendetail kann mit bekannten videotechnischen Verfahren berührungs- und nahezu verzögerungsfrei gemessen werden. Bei diesen bekannten zweikanaligen Verfahren ist das vorgesetzte Trennraster orthogonal zum Pixelraster angeordnet, sodass die Auflösung in der einen (beispielsweise horizontalen) Richtung auf die Hälfte vermindert wird, während sie in der anderen (entsprechend vertikalen) Richtung unverändert bleibt. Um die Anforderungen an die Genauigkeit und Reaktionszeit des Trackingverfahrens für die Augenposition zu reduzieren, wurde vorgeschlagen, Bildpunktreserven in den linken und rechten Bildspalten des jeweils gerasterten Stereopaares einzuführen (vergleiche beispielsweise DE 197 36 035 A1). Dadurch wird zwar eine gewisse Toleranz gegenüber Kopfbewegungen des Betrachters erreicht, dies aber mit dem Nachteil, dass die bereits halbierte Auflösung in der einen Richtung noch weiter reduziert wird. Bei autostereoskopischen Verfahren mit einem schnellen elektronischen Tracking erfolgt die Anpassung an die momentane Augenposition des Nutzers durch elektronische Verschiebung des gerasterten Bildinhaltes auf dem Matrixbildschirm; bei einem mechanischen und damit relativ aufwändigen und zeitverzögernden Tracking wird die Nachführung durch eine Relativbewegung von Bildschirm und/oder Trennraster gegenüber dem Betrachter erzielt (vergleiche beispielsweise DE 102 46 941 A1). Den Verfahren mit unsymmetrischer Bildauflösung ist eigen, dass entweder ein Teil der ursprünglich vorliegenden Bildinformation nicht für die Abbildung auf dem Matrixbildschirm benutzt wird oder in Richtung der höheren Auflösung Zwischenpixel interpoliert werden müssen. So wird für Matrixbildschirme nach z.B. DE 102 46 941 A1 jede zweite Bildspalte des linken und rechten Stereohalbbildes weggelassen, wodurch störende Abtasteffekte entstehen.

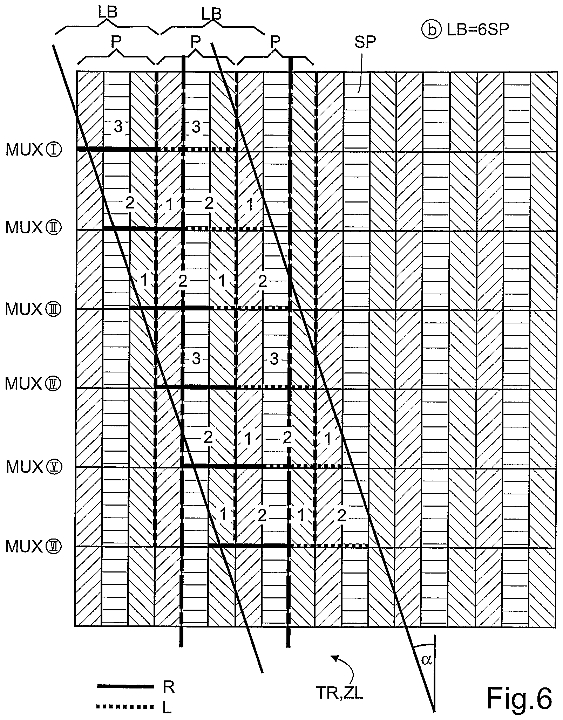

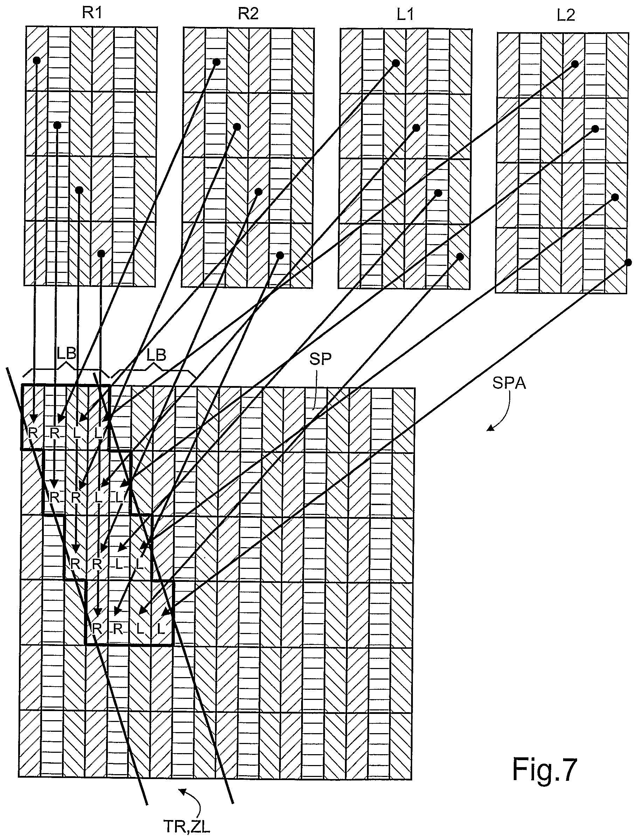

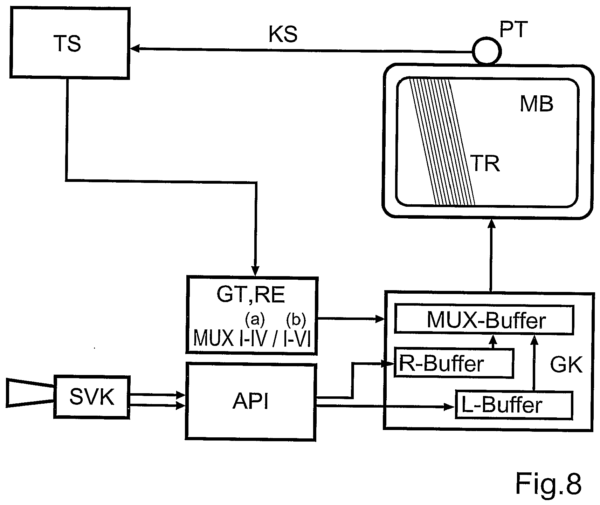

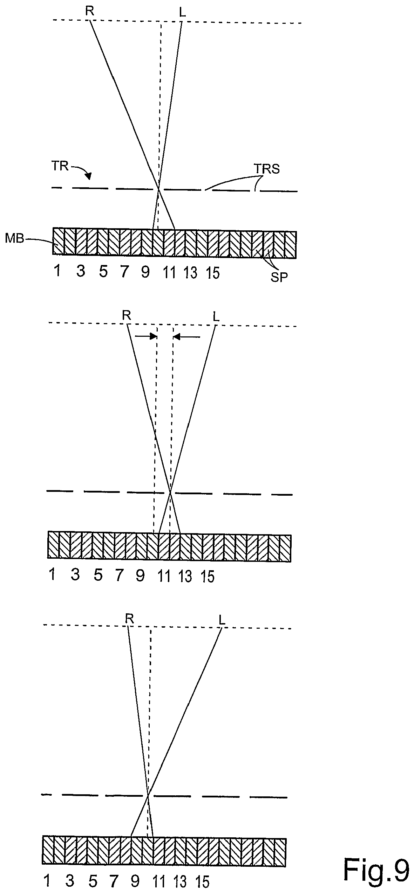

Der nächstliegende Stand der Technik, von dem die vorliegende Erfindung ausgeht, wird in der **Veröffentlichung III** von K. Mashitani et al.: "Step barrier system multi-view glass-less 3-D display" (SPIE-IS&T Vol 5291, 2004, pp. 265-268) beschrieben. Zur Parallaxansicht mit einer Vielzahl von Einzelansichten, beispielsweise vier oder sieben, wird eine "Ausdünnmethode" beschrieben (vergleiche Figur 6 ebenda), bei der für vier Bildansichten aus jedem Pixel einer Bildansicht ein Subpixel ausgewählt und unter Beibehaltung seiner Adresse in den aktuellen Subpixelauszug übernommen wird. Der Auflösungsverlust ist jedoch entsprechend hoch. Bei einer "verlustfreien Methode" werden zwar alle Subpixel in den aktuellen Subpixelauszug übernommen, dabei werden jedoch die meisten Subpixel umadressiert (vergleiche Figur 7 ebenda), was einen großen Rechenaufwand bedeutet. Die Anordnung der Subpixel erfolgt schräg mit einem Versatz von je einem Subpixel über drei Bildzeilen entlang eines stufenförmigen Barrierenrasters, das in seiner Gesamtbreite in einzelnen Stufen beispielsweise vier oder sieben Subpixel überdeckt und durch das die entsprechend umsortierten Subpixel wieder zu einem Pixel optisch für den Betrachter zusammengefügt werden. Durch die Berücksichtigung aller Subpixel wird jedoch ein handelsunüblicher, kostenintensiver Bildschirm mit einer sehr hohen Pixelanzahl benötigt (vergleiche Figur 8 ebenda). In einem Hybridverfahren aus beiden Methoden wird versucht, einen Kompromiss zwischen den Vor- und Nachteilen der beiden Verfahren zu finden (vergleiche Figur 9 ebenda). In beiden Methoden werden jedoch stets eine gleiche Anzahl von Subpixel aus einem Pixel ausgewählt und in den Subpixelauszug übernommen, wodurch ein systematischer Fehler entsteht. Aufgrund des verwendeten Mulitviewverfahrens mit einem Angebot von unterschiedlichen Einzelperspektiven wird außerdem kein Trackingverfahren zur Bildnachführung eingesetzt. Somit können zwar mehrere Betrachter auftreten, ein einzelner Betrachter erhält aber aufgrund seiner natürlichen Kopfbewegungen keine stabile unverzerrte Einzelperspektive, wie sie beispielsweise für medizinische Anwendungen nötig wäre.

US 6 307 585 offenbart ein Verfahren zur autostereoskopischen Erzeugung von dreidimensionalen Bildinformationen aus gerasterten Subpixelauszügen aus zumindest einer rechten und einer linken Bildansicht auf einem farbzugeordnete Subpixel in Bildzeilen aufweisenden Matrixbildschirm mit einem optischen Trennraster.

### Aufgabenstellung und Lösung

Die **Aufgabe** der Erfindung besteht darin, ein Verfahren der gattungsgemäßen, eingangs beschriebenen Art anzugeben, mit dem unter dem grundsätzlichen Aspekt der Komfortsteigerung für den oder die Betrachter eine möglichst hoch auflösende dreidimensionale Information autostereoskopisch erzeugt werden kann, die in horizontaler und vertikaler Richtung annähernd symmetrische Bildauflösung aufweist. Dabei sollen qualitätsmindernde Erscheinungen, wie Übersprechen, Abschattungen durch Trennlinien zwischen den Pixeln und elektronische Bauelemente und Sprünge, weitgehend vermieden und das Verfahren fehlertolerant ausgeführt werden. Das Verfahren soll außerdem eine autostereoskopische Bildwiedergabe für einen einzelnen Betrachter bei einem ausreichenden Bewegungsspielraum für Kopfbewegungen ermöglichen. Dabei soll die optische Nachführung der Bildausgabe für das linke und rechte Betrachterauge fließend, ohne wahrnehmbare Umschalteffekte erfolgen, ohne dass dafür Komponenten einer das Verfahren umsetzenden Anordnung mechanisch bewegt werden müssen. Die Anordnung selbst soll mit handelsüblichen Komponenten, insbesondere mit einem handelsüblichen Matrixbildschirm im Querformat, aufgebaut, leicht handhabbar, störunanfällig und kostengünstig sein.

Die erfindungsgemäße **Lösung** für diese Aufgabe ist dem Verfahrensanspruch 1 zu entnehmen. Eine bevorzugte Anordnung zur Verfahrensdurchführung wird in dem Erzeugnisanspruch 17 aufgezeigt. Vorteilhafte Weiterbildungen sind den jeweiligen Unteransprüchen zu entnehmen und werden im Folgenden im Zusammenhang mit der Erfindung näher erläutert.

Bei dem erfindungsgemäßen Verfahren (im Folgenden kurz "Multiplex-Track-Verfahren" MTV) wird ein farbiger Subpixelauszug einer Stereoansicht aus zwei diskreten Bildansichten (rechte und linke Bildansicht) auf einem handelsüblichen Matrixbildschirm im Querformat erzeugt und zumindest einem Betrachter elektronisch nachgeführt. Dazu werden zunächst die Adressen der Subpixel der rechten Bildansicht in einem rechten Speicher und die Adressen der Subpixel der linken Bildansicht in einem linken Speicher abgelegt. Anschließend wird die aktuelle Augenposition des Betrachters ermittelt. In Abhängigkeit von dieser ermittelten aktuellen Augenposition wird dann ein aktueller Subpixelauszug gebildet und auf dem Matrixbildschirm angezeigt. Wesentliches Merkmal dieses Subpixelauszugs ist, dass alle aufgenommenen Subpixel ihre ursprüngliche Adresse aus dem R- bzw. L-Speicher beibehalten haben. Dadurch können der Rechenaufwand und die Rechenzeit für jeden Subpixelauszug erheblich reduziert werden. Weiterhin befindet sich jedes Subpixel an seinem inhaltlich richtigen Ort aus der Einzelansicht, sodass auch bei der für die Autostereoskopie erforderliche Rasterung eine originalgetreue Bildwiedergabe gewährleistet werden kann. Das Multiplexschema bei der Bildung des Subpixelauszugs besteht aus der fortschreitend bildzeilenweisen Anordnung von zwei (oder drei) benachbarten Subpixeln aus der rechten Bildansicht direkt und lückenlos neben zwei (oder drei) benachbarten Subpixeln aus der linken Bildansicht. Zwischen den einzelnen Bildzeilen wird jeweils ein Versatz von einem Subpixel eingehalten, sodass sich eine Subpixelüberdeckung für das gleiche Auge zwischen benachbarten Bildzeilen von einem (oder zwei) Subpixeln ergibt und Übersprechen zwischen den beiden Bildansichten verringert wird. Der Versatz ist dabei entlang der Schrägstellung des Trennrasters orientiert, sodass immer zwei Pixelpaare unter einem Trennelement verlaufen. Die Anordnung von zwei oder drei benachbarten Subpixeln aus einer Bildansicht ist dabei davon abhängig, ob das einzelne Trennelement vier Subpixel (dann werden jeweils Subpixelpaare aus gleichen Bildansichten nebeneinander angeordnet und die schräg verlaufende Überdeckung zwischen in Bildzeilen benachbarten Subpixelpaaren aus der gleichen Bildansicht ist ein Subpixel breit) oder sechs Subpixel (dann werden jeweils Subpixeltripel aus gleichen Bildansichten nebeneinander angeordnet und die schräg verlaufende Überdeckung zwischen in Bildzeilen benachbarten Subpixeltripeln aus der gleichen Bildansicht ist zwei Subpixel breit) überdeckt.

Das Einschreiben der Subpixeladressen nach dem Multiplexschema in den aktuellen Subpixelauszug ist abhängig von der ermittelten aktuellen Augenposition des Betrachters. In seiner normalen (nominellen) Ausgangsstellung beginnt die Belegung vorzugsweise entsprechend direkt auf dem obersten linken Subpixel des Matrixbildschirms. Durch die räumlich augenrichtige Zuordnung der Subpixel auf die Augen des Betrachters wird mit den beiden (oder drei) ersten Subpixeln aus dem rechten Speicher begonnen. Es schließen sich zwei (oder drei) Subpixel aus dem linken Speicher, die dort in der ersten Bildzeile auf den Plätzen 3 und 4 (oder 4, 5 und 6) abgelegt sind, an und entsprechend alternierend wird die gesamte Bildzeile unter Beibehaltung der ursprünglichen Subpixeladressierung im rechten und linke Speicher belegt. Durch das Beibehalten werden im Falle von Subpixelpaaren aus einem ursprünglichen Pixel mit drei Subpixeln alternierend immer ein oder zwei Subpixel ausgewählt, die Auswahl erfolgt also unsymmetrisch. Im Stand der Technik ist ausschließlich eine symmetrische Auswahl (aus jedem Pixel wird die gleiche Anzahl von Subpixeln ausgewählt) bekannt, was zu systematischen Fehlern führt. Bei der Erfindung wird diese Systematik unterbrochen und somit der systematische Fehler bedeutsam verringert. Weiterhin wird abgewechselt zwischen einer Belegung unter einem vier Subpixel überdeckenden Trennelement von drei Subpixeln aus dem einen und einem Subpixel aus dem anderen Speicher und jeweils zwei Subpixeln aus beiden Speichern, was zu einer weiteren Verringerung des systematischen Fehlers führt. Bei einer Überdeckung eines Trennelements von sechs Subpixeln ist die Belegung für die normale Ausgangsstellung des Betrachters zwar symmetrisch. Alternierend wird immer ein ganzes Pixel aus dem R- und dem L-Speicher eingeschrieben. Bereits bei einem seitlichen Versatz von einem Subpixel durch eine seitliche Kopfbewegung des Betrachters tritt aber auch hier eine alternierende Asymmetrie bei der Subpixelauswahl ein.

In Abhängigkeit von einer seitlichen oder vertikalen Bewegung des Betrachters wird der Subpixelauszug subpixelweise aktualisiert. Da die Subpixelbelegung auf dem Matrixbildschirm fest ist (Aufteilung in rote, grüne und blaue Bildspalten), sind unter Beibehaltung der Adresse entsprechend andere Subpixel mit den passenden Farben aus den beiden Bildansichten auszusuchen, wenn der Betrachter aus einer geänderten Position auf den Bildschirm und somit auf andere Subpixel in anderen Farben blickt. Je nach Bewegung des Betrachters beginnt das Einschreiben des aktuellen Subpixelauszugs dann auf dem zweiten, dritten oder vierten Subpixel in der obersten Bildzeile des Matrixbildschirms. Schaut der Betrachter noch seitlicher in den Bildschirm, springt die Darstellung wieder auf den Beginn auf dem ersten Subpixel um und beginnt von vorne. Einzelne Subpixel im Randbereich des Matrixbildschirms werden entsprechend dem Multiplexschema aufgefüllt oder bleiben unbelegt, da diese vom Betrachter ohnehin nicht mehr eingesehen werden können. Weitere Ausführungen zum Aufbau des aktuellen Subpixelauszugs sind dem speziellen Beschreibungsteil zu entnehmen.

Das MTV basiert auf dem Ziel, die grundsätzlichen Vorteile der Schrägstellung des Trennrasters (möglichst symmetrische Auflösung in beiden Bildrichtungen, Verwischen von Störeinflüssen durch reguläre, sichtbare Strukturen im Matrixbildschirm) und der Einführung einer Bildreserve (größere Bewegungsfreiheit des Betrachters ohne Übersprechen, Toleranz gegen Fehler des Augenpositionsermittlungsverfahrens) in Verbindung mit dem Vorteil der höheren Bildauflösung bei einem zweikanaligen Stereoverfahren zu nutzen. Die auch beim MTV notwendige Verringerung der Auflösung der beiden Bildansichten auf die Hälfte der Auflösung des Matrixbildschirms wirkt sich jedoch nur auf die Subpixel aus. Dadurch kann die Sichtbarkeit von Störungen durch Abtasteffekte deutlich verringert werden. Im Unterschied zum Stand der Technik bei Stereoverfahren werden beim MTV jedoch bei der Nachführung der Betrachtungszonen positionsabhängig neue Subpixelauszüge aus der Komposition der beiden Stereoteilbilder verwendet. Das MTV sichert, dass die in der Auflösung des Matrixbildschirms vorliegenden beiden Bildansichten mit symmetrischer Auflösung auf dessen Subpixelraster abgebildet werden. Das aus der Schrägstellung des Trennrasters bekannte Übersprechen der Einzelansichten bei Multiview-Systemen wird durch diese spezielle Subpixelanordnung und durch die Gestaltung des Trennrasters vermieden.

Zusammenfassend sind beim MTV nach der Erfindung als besondere Vorteile zu nennen:
- anwendbar im üblichen Bildschirmquerformat bei annähernd symmetrischer stereoskopischer Bildauflösung in horizontaler und vertikaler Richtung,
- nahezu fließendes, vollelektronisches Nachführen des Bildinhalts in Abhängigkeit von der aktuellen Betrachterposition (kein sichtbares Umschalten mit dazwischen liegender Schattenzone wie bei orthogonaler Anordnung des Trennrasters, keine mechanisch bewegten Teile),
- weniger Einschränkungen bei der Verwendung moderner LCD-Displays mit Leiterbahnen, Transistoren und anderen sichtbaren Strukturen innerhalb der Pixelapertur (wie bei weitwinkeligen LCD-Displays mit Multi-Domain Vertical Alignment), daher auch Investitionssicherheit bei Modifikationen der Subpixelstruktur des Matrixbildschirms,
- reduziertes Übersprechen im schräg verlaufenden Trennraster durch Pufferzonen mit Bildreserve (es werden jeweils zwei oder drei horizontal benachbarte Subpixel für eine Bildperspektive genutzt).

In einer speziellen Ausführungsform des MTV kann ein technisch sehr einfach realisierbares Subpixel-Multiplexschema verwendet werden, das den Anforderungen an ein elektronisches Tracking sehr entgegenkommt. Zur Vermeidung von Wiederholungen wird hier auf den speziellen Beschreibungsteil verwiesen.

Wesentliches Merkmal des MTV ist auch das elektronische Nachführen der aktuellen autostereoskopischen Bildinformation an die aktuelle Position der Betrachteraugen. Vorteilhaft kann die Bestimmung der aktuellen Augenposition durch Einbeziehung eines bevorzugt videobasierten Trackingverfahrens zum Auffinden von Kopf- oder Augendetails des zumindest einen Betrachters erfolgen. Trackingverfahren sind allgemein bekannt und zuverlässig entwickelt. Sie können ohne weitere Belastung des Betrachters, wie beispielsweise durch Markierungen am Betrachterkopf, arbeiten und vermindern dadurch nicht den Anwenderkomfort. Im Gegensatz dazu erhöhen sie diesen, da durch das elektronische Tracking beim MTV Kopfbewegungen des Betrachters zugelassen werden, ohne dass dieser dabei die Stereozone einer Bildperspektive verlässt. Videobasierte Trackingverfahren arbeiten mit Videokameras zur Aufzeichnung der aktuellen Kopf- oder Augendetails, die entsprechend ausgewertet werden. Mit Videokameras können auch die beiden getrennten Bildansichten für das rechte und linke Auge des Betrachters aufgenommen werden. Andere Trackingverfahren ohne eine Videoaufzeichnung des Betrachters sind ebenfalls technisch ausgereift und einsetzbar. Vorteilhaft beim Trackingverfahren ist eine dynamische Änderung der Aufnahmeeinstellung für die Bildansichten in Abhängigkeit der vom Trackingverfahren bestimmten aktuellen Augenposition. Neben einer autostereoskopischen Darstellung statischer Bildszenen ist auch eine Darstellung von autostereoskopischen Bewegtbildern möglich. Vorteilhaft ist dabei eine dynamische Ablage der Bildansichten. Hierbei können Standardvideoformate benutzt und zur Adressierung der Subpixel ausgewertet werden. Weiterhin ist eine automatische Anpassung der Auflösung der Bildansichten an die Auflösung des Matrixbildschirms von Vorteil (Formatkonversion), wie sie beispielsweise in der Software üblicher Computer-Betriebssysteme integriert ist.

Weiterhin kann durch eine Abstandsveränderbarkeit des Trennrasters zum Matrixbildschirm die Abbildungsgeometrie der Rasterung und damit die Größe der Stereobereiche verändert und so auf Abstandsänderungen des Betrachters in der Tiefe zum Bildschirm reagiert werden. Durch das elektronische Tracking können nur seitliche und vertikale Veränderungen in der Augenposition kompensiert werden. Darstellungsveränderungen können auch vorgenommen werden, indem beispielsweise das Trennraster zur Aktivierung oder Sperrung der einzelnen Trennelemente angesteuert wird. Dadurch kann das Trennraster teilweise oder vollständig abgeschaltet werden. Bei einer vollständigen Abschaltung können nur noch monoskopische Bildinformationen auf dem Bildschirm dargestellt werden. Es können aber auch Bereiche abgeschaltet werden und andere erhalten bleiben, sodass ein Hybrid-Bildschirm entsteht, der sowohl monoskopische als auch stereoskopische Bildinformationen wiedergibt. Es kann aber beispielsweise auch jede zweite Rasterspalte weggeschaltet werden, sodass sich der Abstand zwischen den einzelnen Trennelementen verdoppelt. Durch eine derartige Maßnahme kann beispielsweise, wie im Folgenden beschrieben, wahlweise ein anderer Betrachtungsmodus betrieben werden.

Eine Modifizierung des MTV sieht eine Aufteilung der rechten Bildansicht in eine erste rechte und eine zweite rechte Bildansicht und eine Aufteilung der linken Bildansicht in erste linke und eine zweite linke Bildansicht, eine Ablage der Adressen der Subpixel der ersten und zweiten rechten Bildansicht in einem ersten und zweiten rechten Speicher und der ersten und zweiten linken Bildansicht in einem ersten und zweiten linken Speicher, eine Bildung des aktuellen Subpixelauszugs durch fortschreitend bildzeilenweise alternierende Anordnung von zwei benachbarten Subpixeln aus jeweils beiden rechten oder linken Bildansichten und eine Einbeziehung eines Trackingverfahrens zum Auffinden von Kopf- oder Augendetails von zwei Betrachtern vor, wobei jedem Betrachter immer eine rechte und eine linke Bildansicht zugeordnet wird. Bei dieser Modifizierung bleiben die wesentlichen Vorteile des MTV, insbesondere das verringerte Übersprechen im schräg verlaufenden Trennraster und die Erhaltung der ursprünglichen Pixeladressierung, erhalten, es wird jedoch nunmehr auch möglich, zwei Betrachter gleichzeitig mit jeweils einer autostereoskopischen Information - allerdings bei nochmals halbierter Auflösung und verstärktem Übersprechen - zu versorgen. Dazu werden gleichzeitig zwei linke und zwei rechte Stereoteilbilder in entsprechenden Speichern abgelegt. Die Subpixelpaare werden nun zwar nicht mehr aus ein und demselben Stereoteilbild ausgewählt, aber aus zwei eng benachbarten, sodass die Reservefunktion der mehrfachen Subpixelauswahl erhalten bleibt und die Wirkung des Übersprechens reduziert wird. Auch in dieser Modifikation werden die einzelnen autostereoskopischen Bildinhalte dem jeweiligen Betrachter nachgeführt. Damit werden zwei Trackingsysteme verwendet, die beide auf denselben Bildschirm zugreifen, sodass zwei Betrachter gleichzeitig eine ähnliche (oder gleiche bei einer einfachen Verdopplung der beiden Stereoansichten) autostereoskopische Bildinformation auch bei Kopfbewegungen erhalten. Analoges gilt für drei Betrachter mit drei Trackingsystemen, wenn jeweils drei rechte und drei linke Bildansichten eingespeichert werden. Hierbei drittelt sich die Bildauflösung gegenüber der Benutzung durch einen Betrachter jedoch.

Eine derartige Aufteilung auf zwei oder drei Betrachter eignet sich, wenn sich diese in einer mittleren Entfernung zum Bildschirm befinden. Bei einem Betrachter in kurzer Distanz zum Bildschirm sollte eine größtmögliche Auflösung angestrebt und damit nur eine rechte und eine linke Bildansicht in einer Einzelperspektive vorgesehen sein. Da sich aber die Anzahl der Betrachter und deren Entfernung zum Bildschirm ändern können, ist es vorteilhaft, wenn ein manuelles oder automatisches Umschalten des Trackingverfahrens zwischen dem Tracken von einem, zwei oder drei Betrachtern in Abhängigkeit von der Entfernung des vordersten Betrachters zum Matrixbildschirm erfolgen kann. Schließlich kann noch ein zusätzlicher Modus zur trackingfreien Multiview-Darstellung aus N-Bildansichten vorgesehen sein, wie er aus dem Stand der Technik bekannt ist. Dieser Modus ist sinnvoll dann zu wählen, wenn sich eine Vielzahl von Betrachtern in einer größeren Entfernung zum Bildschirm aufhält. Bei einer Schaltbarkeit der Trennelemente können beispielsweise acht benachbarte Bildansichten zu sieben verschiedenen Blickperspektiven als Parallaxansicht zusammengefügt werden. Vorteilhaft kann dann in Abhängigkeit von der Anzahl der Betrachter und deren Entfernung zum Bildschirm manuell oder automatisch zwischen der getrackten Stereoansicht für ein, zwei oder drei Betrachter und der ungetrackten Multiviewansicht für mehr als drei Betrachter in Abhängigkeit von der Entfernung des vordersten Betrachters zum Matrixbildschirm umgeschaltet werden. Weitere Umschaltmöglichkeiten sind das Umschalten auf einen monoskopen Bildinhalt oder auf einen hybriden Bildinhalt mit stereoskopischen und monoskopischen Betrachtungszonen.

Das MTV ist technisch relativ einfach mit handelsüblichen Bauteilen zu realisieren. Bevorzugt kann es sich um eine Anordnung mit einem farbzugeordnete Subpixel in Bildzeilen aufweisenden Matrixbildschirm und einem optischen Trennraster handeln, bei dem die Periodizität der Trennelemente in horizontaler Richtung a) vier oder b) sechs Subpixel entspricht und die Trennelemente mit einem dem kleinen Seitenverhältnis der Subpixel entsprechenden Anstieg schräg zur Matrix des Bildschirms verlaufen. Weiterhin sind zumindest ein rechter Speicher und ein linker Speicher sowie ein Multiplexspeicher zur Speicherung des aktuell gebildeten Subpixelauszugs, eine Recheneinheit zur Bildung des aktuellen Subpixelauszugs sowie zur Steuerung des Verfahrensablaufs und der einzelnen Anordnungskomponenten und zumindest einem vorzugsweise videobasierte Trackingsystem zum Auffinden von Kopf- oder Augendetails eines Betrachters vorgesehen. Je nach Betrachtungsmodus können in Abhängigkeit von der Anzahl und der Entfernung der Betrachter auch zwei oder drei Trackingsysteme zum Auffinden von Kopf- oder Augendetails von zwei oder drei Betrachtern vorgesehen sein. Bewegen sich diese nicht nur seitlich und in der Höhe, sondern auch in der Entfernung zum Bildschirm, ist es vorteilhaft wenn das Trennraster in seinem Abstand zum Matrixbildschirm veränderlich oder abnehmbar ausgebildet ist. Die Abstandsänderung kann manuell oder elektrisch, individuell oder automatisch vorgenommen werden. Durch ein Entfernen des Trennrasters wird eine normale zweidimensionale Betrachtungsweise auf dem herkömmlichen Matrixbildschirm ermöglicht. Bei dem Trennraster können die Trennelemente als Schlitze oder Streifen (Barrieren) oder als Prismen ausgebildet sein, bevorzugt werden jedoch Zylinderlinsen. Somit ist das Trennraster bevorzugt als Lentikularraster mit schräg verlaufenden Zylinderlinsen als Trennelemente ausgebildet. Ein derartiges Trennraster ist einfach herzustellen und gewährleistet eine gleich bleibend hohe optische Abbildungsqualität.

Ein noch feinstufigeres Tracking wird möglich, wenn ein ansteuerbares Trennraster mit alternativen, gegenüber dem Subpixelraster des Matrixbildschirms um ein halbes Subpixel versetzten Trennelement-Kombinationen eingesetzt wird. Für ein derartiges Sub-Subpixel-Tracking erfolgt vorteilhaft eine alternierende Ansteuerung zwischen den Trennelementen in der vorgegebenen Periodizität und weiteren Trennelementen mit gleicher Periodizität, die zu der vorgegebenen Periodizität einen seitlichen Versatz von einer halben Breite eines Subpixels aufweist. Vorteilhaft wird hierzu ein in der Aktivierbarkeit seiner Trennelemente ansteuerbares Trennraster mit Trennstreifen verwendet, wobei die einzelnen Trennstreifen in zwei Gruppen mit gleichen Periodizitäten mit einem Versatz von einer halben Breite eines Subpixels zueinander angeordnet sind. Realisierbar ist sowohl ein mechanisches als auch ein elektronisches Sub-Subpixel-Tracking, wobei letzteres in der technischen Entwicklung vorzuziehen ist. Die Streifen können rein elektronisch geöffnet und verschlossen werden. Eine mechanische Verschiebung von zwei Streifenplatten übereinander ist jedoch auch möglich.

Die rechteckige Form der Subpixel stellt eine idealisierte Beschreibung dar. In der Praxis weichen die Subpixel oft von dieser Form ab, indem Bereiche in den Ecken abgedeckt sind. Dadurch werden die Bereiche kaschiert, in denen Ansteuerelemente integriert sind. Durch geschickte Umverteilung dieser Bereiche kann das Übersprechen in die Nachansicht verringert werden. Insbesondere bei einer beidseitigen Abschrägung der Subpixel wird eine optimale Anpassung der Subpixel an das schräge Trennraster erreicht und damit das Übersprechen minimiert.

### Ausführungsbeispiele

Das Multiplex-Track-Verfahren MTV und eine bevorzugte Anordnung zu seiner Durchführung nach der Erfindung werden zu deren weiterem Verständnis nachfolgend anhand der schematischen **Figuren** näher erläutert. Dabei zeigt jeweils in einem Bildausschnitt:
- **Figur 1**: einen Subpixelauszug für einen senkrechten (nominellen) Einblickswinkel,
- **Figur 2**: die Veränderung des Subpixelauszugs für einen veränderlichen Einblickswinkel,
- **Figuren 3A bis 3D**: vier Multiplexschemen für 4 Subpixel hinter einem Trennelement,
- **Figuren 4A bis 4F**: sechs Multiplexschemen für 6 Subpixel hinter einem Trennelement,
- **Figur 5**: die Subpixelverteilung für 4 Subpixel hinter einem Trennelement,
- **Figur 6**: die Subpixelverteilung für 6 Subpixel hinter einem Trennelement,
- **Figur 7**: einen Subpixelauszug bei mehreren rechten und linken Bildansichten,
- **Figur 8**: ein Blockschaltbild einer Anordnung zur Durch-führung des MTV,
- **Figur 9**: ein ansteuerbares Trennraster für Sub-Subpixel-Tracking,
- **Figur 10**: ein ansteuerbares Trennraster für Einzel- und Mehrnutzernutzung und
- **Figur 11**: ein abgeschrägtes Subpixeldesign.

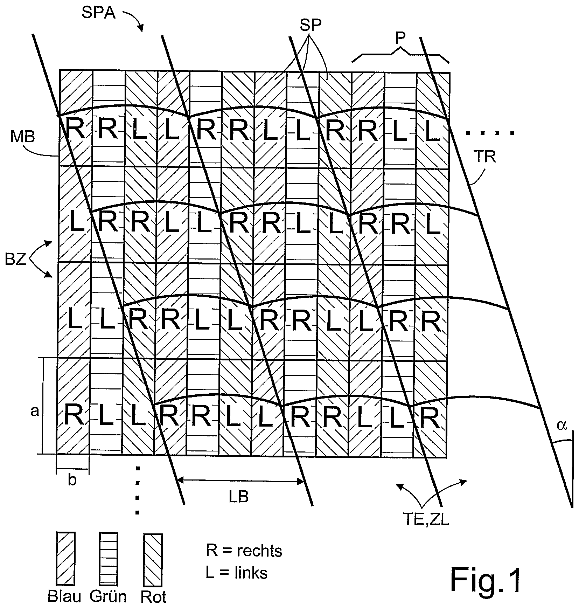

In **Figur 1** ist als Ausführungsbeispiel für das **MTV** (Multiplex-Track-Verfahren) schematisch ein Ausschnitt aus einem mit einem gerasterten Subpixelauszug **SPA** belegten Matrixbildschirm **MB** zur autostereoskopischen Informationswiedergabe dargestellt. Auf dem Matrixbildschirm **MB** (LCD, Plasma-Display) werden gerastert gleichzeitig eine linke (**L**) und eine rechte (**R**) Bildansicht (Stereoansicht, Stereohalbbild) wiedergegeben, gemeint sind die Ansichten für das linke bzw. rechte Auge eines Betrachters. Der Matrixbildschirm **MB** weist vertikale Farbstreifen aus blauen Subpixeln **SP** (in der **Figur 1** nach rechts ansteigend schraffiert dargestellt), grünen Subpixeln **SP** (in der **Figur 1** waagerecht schraffiert dargestellt) und roten Subpixeln **SP** (in der **Figur 1** nach rechts abfallend schraffiert gezeigt) auf. Die Subpixel **SP** sind in horizontalen Bildzeilen **BZ** angeordnet. Ein Pixel **P** einer Bildinformation setzt sich zusammen aus einem blauen, einem grünen und einem roten Subpixel **SP.** Der Farbwert des Pixels **P** ergibt sich aus der Überlagerung der Intensitäten der drei Subpixel **SP** (die Farbmischung findet im Auge des Betrachters statt). Bei dem schräg zur Matrix des Matrixbildschirms **MB** verlaufenden Trennraster **TR** gehören entsprechend farbige Subpixel **SP** entlang der Schrägstellung zu einem Pixel **P.** Die Zuordnung der Subpixel **SP** aus beiden Bildansichten **L, R** in die gerasterte Bildansicht auf dem Matrixbildschirm **MB** wird durch ein Multiplexschema **MUXᵢ** beschrieben. Ein dem Matrixbildschirm **MB** vorgesetztes Trennraster **TR** ist unter einem Winkel α zur vertikalen Achse des Matrixbildschirms **MB** gedreht angebracht (Slanted-Raster-Prinzip). Der Winkel berechnet sich zu α = **arctg b/a,** wobei **b** die schmale Seite und **a** die breite Seite eines Subpixels **SP** bezeichnet. Damit entspricht der (negative) Anstieg des Trennrasters **TR** dem kleinen Seitenverhältnis der Subpixel **SP.** Bei einem Verhältnis von **b : a** = **1: 3** ergibt sich ein Winkel α von 18,43° für die Schrägstellung des Trennrasters **TR.** Im gezeigten Ausführungsbeispiel hat das Trennraster **TR** Zylinderlinsen **ZL** als Trennelemente **TE.** Dabei ist die Linsenbreite **LB** (Pitch) so gewählt, dass eine Zylinderlinse **ZL** in horizontaler Richtung die Breite von etwa vier Subpixeln **SP** aufweist. Eine Überdeckung eines Trennelements **TE** von sechs Subpixeln **SP** ist ebenfalls möglich, die Linsenbreite **LB** ist dann entsprechend größer, der Anstieg des Trennrasters **TR** ändert sich nicht.

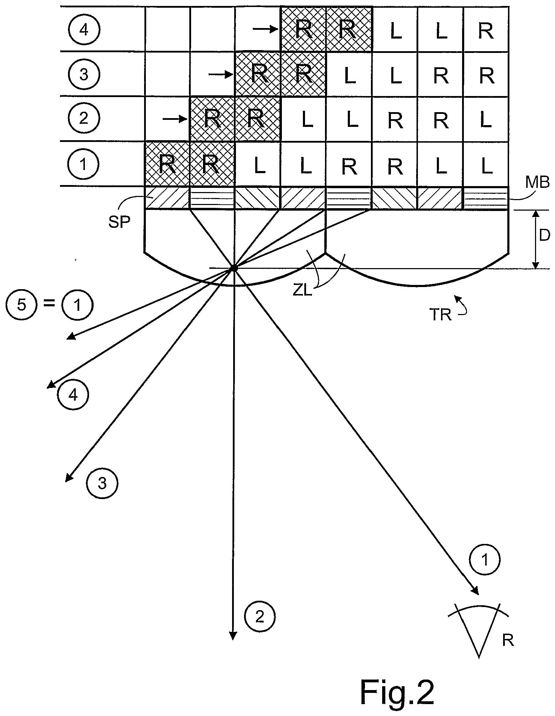

Zur optischen Adressierung der beiden Augen eines Betrachters wird ein Trackingverfahren verwendet. Bei Kopfbewegungen des Betrachters erfolgt eine Nachführung der Betrachtungszonen für das linke und rechte Auge durch eine entsprechende Auswahl oder Anpassung des Multiplexschemas **MUXᵢ** (elektronisches Tracking). In der **Figur 2** ist die seitliche Verschiebung des Bildinhalts auf dem Matrixbildschirm **MB** beispielhaft für das rechte Auge **R** des Betrachters dargestellt, wenn sich dieses aus der nominellen Normalposition (1) in die Positionen (2), (3), (4) oder (5) bewegt, wobei die Position (5) wieder der Position (1) entspricht. Zu erkennen ist die seitliche Veränderung des Bildinhalts um jeweils ein Subpixel **SP** auf jeweils farblich andere Subpixel **SP,** sodass für den Subpixelauszug **SP** jeweils andere Subpixel **SP** aus den beiden Bildansichten **L, R** ausgewählt werden müssen, um den Bildinhalt korrekt der Augenbewegung nachzuführen.

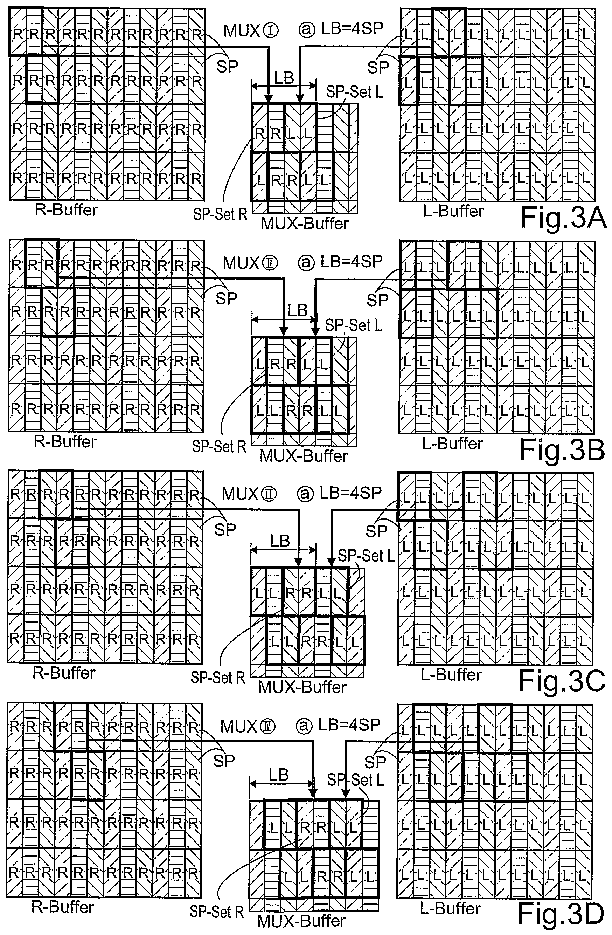

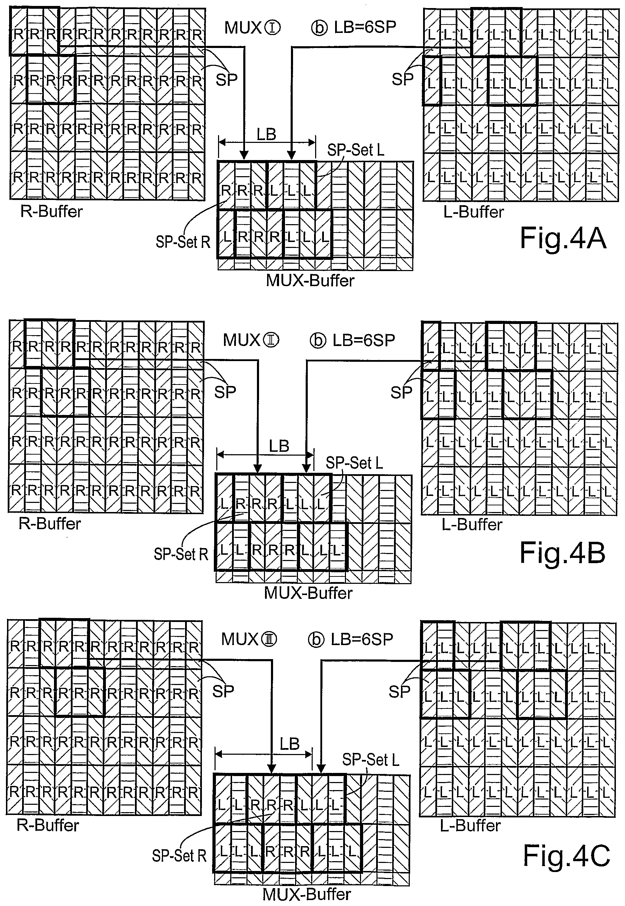

In der nominellen Normalansicht durch den Betrachter (senkrecht zur Bildschirmoberfläche, siehe **Figur 1**) gehören jeweils zwei horizontal benachbarte Subpixel **SP** zur gleichen linken oder rechten Bildansicht (**L** oder **R**). Die Paare aus zwei Subpixeln **SP** aus der linken Bildansicht **LL** und zwei rechten Subpixeln **SP** aus der rechten Bildansicht **RR** werden alternierend bildzeilenweise fortgeschrieben und so der gesamte Matrixbildschirm **MB** gefüllt. Aufgrund des Abstandes **D** zwischen dem Trennraster **TR** und dem Matrix-bildschirm **MB** (vergleiche **Figur 2**) entsteht ein Parallaxeneffekt: bei entsprechender Dimensionierung des Matrixbildschirms **MB** mit vorgesetztem Trennraster **TR** sieht der Betrachter je nach momentaner Kopfposition mit dem linken Auge **L** im Wesentlichen eine bestimmte Auswahl der Subpixel **SP** des Matrixbildschirm **BM** (**SP-Set L**, vergleiche **Figuren 3A** und **4A****,** nicht erläuterte Bezugszeichen siehe **Figur 1**) und mit dem rechten Auge **R** eine bestimmte Auswahl der übrigen Subpixel **SP** (**SP-Set R**, vergleiche **Figuren 3A** und **4A**). Damit der Stereoskopieeffekt zustande kommt, werden die Subpixel **SP** der linken und rechten Stereoansicht **L, R** durch einen Bildmultiplexer den entsprechenden Subpixel-Sets (**SP-Set L, SP-Set R**) zugewiesen, dabei bleiben die Adressen der Subpixel **SP** unverändert. Da die Bildschirmkoordinaten der beiden Subpixel-Sets (**SP-Set L**, **SP**-**Set R)** von der momentanen Augenposition (genauer: den 3D-Koordinaten beider Pupillen) des Betrachters relativ zum Bildschirm abhängen, ist die Anwendung eines Trackingverfahrens erforderlich. Im Folgenden wird vereinfachend davon ausgegangen, dass die Anordnung aus Matrixbildschirm **MB** und Trennraster **TR** für einen festen nominellen Betrachtungsabstand des Betrachters ausgelegt werden soll; eine Anpassung der Adressierung der Subpixel **SP** erfolgt also nur in Abhängigkeit von den horizontalen und vertikalen Kopfbewegungen des Betrachters. Diese Vereinfachung ist zulässig, da die Betrachtungszonen eine für praktische Anwendungen ausreichende Ausdehnung auch in Richtung auf den Matrixbildschirm **MB** aufweisen. Die Betrachtungszonen für das hier beschriebene autostereoskopische **MTV** sind rautenförmige Bereiche mit maximaler horizontaler und vertikaler Ausdehnung am Ort der nominellen Betrachtungsentfernung.

### Ausführung des Subpixel-Multiplexings

Das Subpixel-Multiplexing wird im Folgenden für die in der **Figur 1** dargestellte beispielhafte Rasteranordnung beschrieben. In einer speziellen Ausführungsform des Multiplex-Track-Verfahrens **MTV** kann ein technisch sehr einfach realisierbares Subpixel-Multiplexschema verwendet werden, das den Anforderungen an ein elektronisches Tracking sehr entgegenkommt. Es wird angenommen, dass die beiden Bildansichten in der Form von zwei vorgefertigten Bitmaps (z.B. Bildpaar einer Stereokamera) existieren oder ggf. in Abhängigkeit von der Betrachterperspektive von einem speziellen Computerprogramm erzeugt werden. Solange herkömmliche Anwenderschnittstellen (APls) wie Open GL und DirectX keinen direkten Zugriff auf die Adressierung der Subpixel einer Grafikkarte erlauben, ist ein modifizierter, hardware-spezifischer Grafiktreiber für das Subpixel-Multiplexing erforderlich.

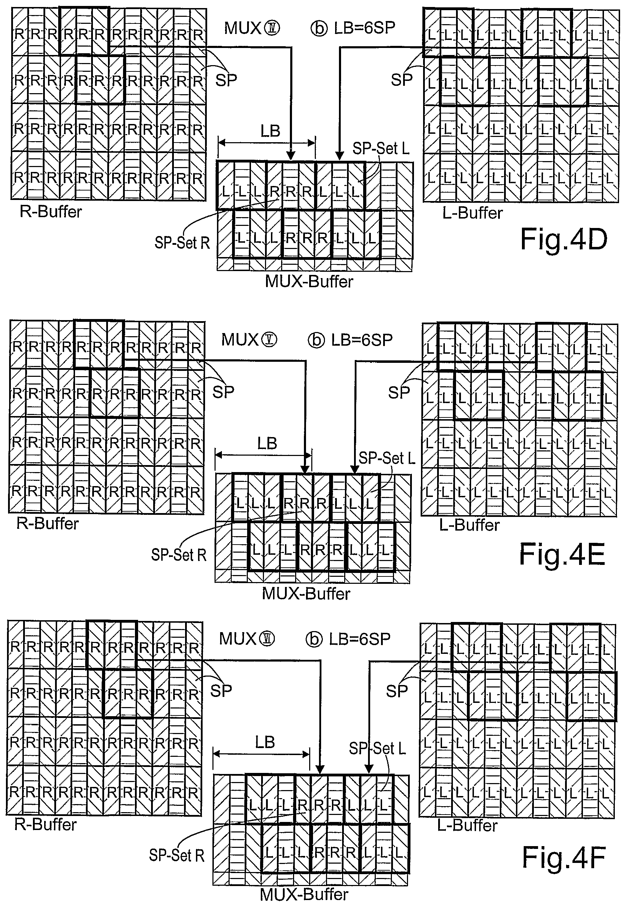

Es wird weiterhin angenommen, dass die Bitmaps der beiden Bildansichten ganz oder teilweise in zwei Speichern, dem linken Speicher **L-Buffer** und dem rechten Speicher **R-Buffer,** gehalten werden. Die Multiplexsoftware liest einzelne Subpixel **SP** oder Paare von benachbarten Subpixeln **SP** an bestimmten Adressen aus den beiden Speichern **L-Buffer, R-Buffer** aus und schreibt die Videowerte an die korrespondierenden Adressen in einem Multiplexspeicher **MUX-Buffer**. Ein besonderer Vorteil des **MTV** liegt darin begründet, dass lediglich maximal vier (bei einer Überdeckung eines Trennelements **TE** von vier Subpixeln **SP**) oder sechs (bei einer Überdeckung eines Trennelements **TE** von sechs Subpixeln **SP**) Multiplexschemata in der Treibersoftware der Grafikkarte implementiert werden müssen, um den Multiplexspeicher **MUX-Buffer** in Abhängigkeit von der horizontalen und vertikalen Betrachtungsposition zu adressieren (vergleiche **Figuren 3** und **4**). Eine entsprechende Treibersoftware des verwendeten Trackingsystems muss dann nur noch das erforderliche Multiplexschema **MUX** in Abhängigkeit von der jeweiligen Pupillenposition des Betrachters (unter Berücksichtigung der als bekannt vorausgesetzten optischen und geometrischen Parameter des Matrixbildschirms **MB** und des Trennrasters **TR**) auswählen und danach den Matrixbildschirm **MB** füllen.

Bei der Bildung des Subpixelauszugs auf dem Matrixbildschirm **MB** können zwei unterschiedliche Varianten zur Anwendung kommen. Bei der ersten Variante können a) vier oder b) sechs verschiedene Multiplexschemata **MUXᵢ**, beginnend bei dem ersten bis a) vierten oder b) sechsten Subpixel **SP** in der ersten Bildzeile, in der Multiplexsoftware fest vorgegeben werden. In Abhängigkeit von der bestimmten aktuellen Augenposition wird auf das passende Multiplexschema **MUXᵢ** zugegriffen und der Multiplexspeicher **MUX-Buffer** entsprechend aufgefüllt. Dabei gibt es vier (vergleiche **Figuren 3A** bis **3D**) oder sechs (vergleiche **Figuren 4A** bis **4F**) verschiedene Multiplexschemata **MUXᵢ**, da der Betrachter auf jedes der vier oder sechs Subpixel **SP** unter dem Trennelement **TE** schauen kann und dieses dann quasi als "erstes" Subpixel **SP** für das rechte Auge **R** belegt wird. Die vor dem "ersten" Subpixel **SP** liegenden Subpixel **SP** bis zum Rand des Matrixbildschirms **MB** werden entsprechend alternierend aufgefüllt und zeigen den Unterschied in den verschiedenen Multiplexschemata **MUXᵢ**. Im Verlauf der **Figuren 3A** bis **3D** bzw. **4A** bis **4F** springt das "erste" Subpixel **SP** für das rechte Auge **R** immer ein Subpixel **SP** weiter nach rechts, sodass davor immer andere Subpixelkonstellationen auftreten. Erst der fünfte bzw. siebte Versatz um ein Subpixel **SP** zeigt wieder genau das erste Multiplexschema **MUX**.

Bei der zweiten Variante, die in den Figuren nicht weiter dargestellt ist, werden in Abhängigkeit von der bestimmten aktuellen Augenposition nur drei verschiedene Multiplexschemata **MUXᵢ**, beginnend bei dem ersten, zweiten oder dritten Subpixel **SP** in der ersten Bildzeile und ein ganzzahliger Pixelsprung **nP** vorgegeben. Der Subpixelauszug, beginnend für das vierte (oder siebte Subpixel **SP** oder zehnte Subpixel **SP** usw.) Subpixel **SP** bei vier Subpixeln **SP** unter einem Trennelement **TE,** ergibt sich dann aus dem ersten Multiplexschema **MUX**, verschoben um ein ganzes Pixel **P** (oder zwei Pixel **2P** für das siebte Subpixel **SP** oder drei Pixel **3P** für das zehnte Subpixel **SP** usw.) Analog ergibt sich der Subpixelauszug für das fünfte Subpixel **SP** aus dem um ein Pixel **P** verschobenen zweiten Multiplexschema **MUX** und der Subpixelauszug für das sechste Subpixel **SP** aus dem um ein Pixel **P** verschobenen dritten Multiplexschema **MUX**. Danach wiederholt sich die Belegungsvorschrift mit einen Pixelsprung von **2P** usw. Bei sechs Subpixeln **SP** unter einem Trennelement **TE** ergeben sich analoge Verhältnisse, es werden ebenfalls die drei ersten Multiplexschemata **MUXᵢ** um ganzzahlige Pixelzahlen **nP** entsprechend verschoben.

Die erste Variante mit einem direkten Auslesen der verschiedenen Multiplexschemata **MUXᵢ** wird immer dann vorteilhaft angewendet werden, wenn die darzustellende Bildinformation kleiner ist als der Matrixbildschirm **MB.** Bei Verschieben des Inhalts können dabei Subpixel **SP** am Rand unbelegt bleiben, da hier kein Einblick durch den Betrachter mehr möglich ist. Die zweite Variante kann vorteilhaft angewendet werden, wenn das darzustellende Bild größer als der Matrixbildschirm **MB** ist. Auch das verschobene Bild füllt dann immer vollständig den gesamten Matrixbildschirm **MB.**

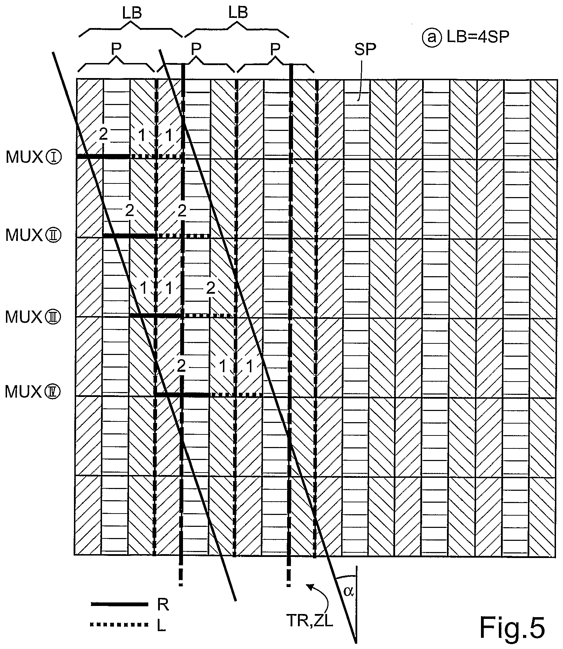

Die Verteilung der Subpixel **SP** in Bezug auf das Betrachterauge ist aus der **Figur 5** für eine Zylinderlinse **ZL** mit vier überdeckten Subpixeln **SP** ersichtlich (Variante **a: LB** = **4SP**). Weiterhin ist die Schrägstellung der Zylinderlinse **ZL** um den Winkel α dargestellt, die horizontale Pixelaufteilung mit je drei Subpixeln **SP** rot, grün, blau ist durch die Augenzuordnung **R, L** angedeutet. Es ist ersichtlich, dass sich jedes horizontale Pixel **P** aus drei verschieden farbigen Subpixeln **SP** immer zusammensetzt aus zwei Subpixeln **SP** aus der einen und einem Subpixel **SP** aus der anderen Bildansicht (Zahlenangaben 2-1). Unter der Zylinderlinse **ZL** wird dann noch ein Subpixel **SP** aus dem nächsten linken Pixel **P** positioniert. Es ist ersichtlich, dass aus Pixeln **P** der beiden Bildansichten immer alternierend ein oder zwei Subpixel **SP** in den Subpixelauszug **SPA** übernommen werden. Durch dieses im **MTV** gewählte alternierende Multiplexschema **MUX** mit einem bildzeilenweisen Versatz von einem Subpixel **SP**, sodass eine schräg verlaufende Überdeckung von einem Subpixel **SP** entsteht, sind zum einen die Subpixel **SP** entlang der schräg verlaufenden Zylinderlinse **ZL** optimal angeordnet, sodass kein Übersprechen auftritt, zum anderen vereinigen sie sich für den Betrachter optimal farblich jeweils zu einem Pixel **P**, sodass dieser keine inhaltlichen Sprünge wahrnimmt, obwohl durch die Vermischung aus unterschiedlichen Pixeln **P** der systematische Fehler erheblich reduziert wurde.

Die **Figur 6** zeigt die analoge Verteilung der Subpixel **SP** für eine Zylinderlinse **ZL**, die sechs Subpixel **SP** überdeckt (Variante **b: LB = 6SP**)**.** Im ersten Multiplexschema **MUX I** stimmt die Auswahl von drei Subpixeln **SP** aus je einer Bildansicht mit den Pixeln **P** unter der Zylinderlinse **ZL** überein (Zahlenangaben 3-3). Bei einem Versatz von einem Subpixel **SP** (Multiplexschema **MUX II**) wird folgende asymmetrische Verteilung ersichtlich : zwei Subpixel **SP** aus dem ersten rechten Pixel **P**, ein Subpixel **SP** aus dem zweiten rechten Pixel **P**, zwei Subpixel **SP** aus dem ersten linken Pixel **P**, ein Subpixel **SP** aus dem zweiten linken Pixel **P** (Zahlenangaben 2-1-2-1). Diese alternierende Folge wird im nächsten Multiplexschema **MUX III** zwischen den Bildansichten vertauscht (Zahlenangaben 1-2-1-2). Auch bei einer Anordnung von sechs Subpixeln **SP** unter einer Zylinderlinse **ZL** ist damit gewährleistet, dass immer alternierend, drei, zwei oder ein Subpixel **SP** aus den Pixeln **P** in den aktuellen Subpixelauszug **SPA** übernommen werden und die oben genannten Vorteile erhalten bleiben.

Die **Figur 7** zeigt einen Subpixelauszug **SPA**, wenn eine erste und zweite rechte Bildansicht **R1**, **R2** und eine erste und zweite linke Bildansicht **L1**, **L2** verwendet werden, für den Fall der Variante a), dass vier Subpixel **SP** unter einem Trennelement **TE** liegen. Die Anwendung der verschiedenen Multiplexschemata **MUXᵢ** mit einem bildzeilenweisen Versatz von einem Subpixel **SP** entlang des schräg verlaufenden Trennrasters **TR** gilt analog, ebenso die Beibehaltung jeder Subpixeladresse von Ablage- zu Videospeicher. Bei jeweils zwei rechten und zwei linken Bildansichten **R1/R2, L1/ L2** sind entsprechend zwei rechte und zwei linke Speicher für die Pixelablage vorgesehen. Ebenfalls erhalten bleibt die Paarbildung von zwei rechten Subpixeln **SP** und deren direkte Anordnung neben zwei linken Subpixeln **SP.** Im Unterschied zu der Verwendung von nur zwei Bildansichten **R, L** entstammen bei dieser Variante jedoch nicht beide rechte oder linke Subpixel **SP** jeweils derselben Bildansicht **R, L,** sondern zwei unterschiedlichen, wenn auch sehr eng benachbarten rechten und linken Bildansichten **R1/R2, L1/L2.** Durch diese Modifikation können entweder zwei oder (bei sechs Subpixeln **SP** unter einem Trennelement **TE**) drei Betrachter gleichzeitig getrackt und individuell eine Bildperspektive aus jeweils zusammengehörigen rechten und linken Bildansichten **(R1/L1**, **R2/L2)** nachgeführt bekommen oder aber bei einem Deaktivieren des Trackings mehr als zwei oder drei Betrachter wie bei einem herkömmlichen Multiview-System verschiedene Bildperspektiven ohne eine Bildnachführung betrachten. Je nach Erfordernis kann zwischen den verschiedenen Modi umgeschaltet werden. Eine analoge Aufteilung in drei rechte und drei linke Bildansichten für die Variante b) mit sechs Subpixeln unter einem Trennelement **TE** ist ebenfalls möglich. Es können mit drei Trackingsystemen drei Betrachter getrennt voneinander mit je einer nachführbaren Einzelperspektive versorgt werden. Durch Verwendung der Subpixel **SP** aus nur einer Bildansicht kann eine örtlich begrenzte oder vollflächige monoskopische Bildwiedergabe erzielt werden; ggf. mit (örtlicher) Deaktivierung des Trennrasters **TR**.
In der **Figur 8** ist ein Blockschaltbild für eine Anordnung zur Durchführung des **MTV** dargestellt. Eine beispielsweise mit einer Stereo-Videokamera **SVK** aufgenommene 3D-Anwendung mit einer rechten Bildansicht **R** und einer linken Bildansicht **L** wird über eine herkömmliche Anwenderschnittstelle **API** in einen rechten Speicher **R-Buffer** und einen linken Speicher **L-Buffer** auf einer Grafikkarte **GK** geladen. Über ein bevorzugt videobasiertes Trackingsystem **TS** zum Auffinden von Kopf- oder Augendetails eines Betrachters, beispielsweise ein Pupillentracker **PT**, wird die aktuelle Augenposition des Betrachters ermittelt. In Abhängigkeit vom aktuell abgebildeten Kamerasignal **KS** wird das Trackingsystem **TS** angesteuert. In der Grafiksoftware des Grafiktreibers **GT** sind die verschiedenen Multiplexschemen **MUX I-IV/VI** abgelegt. Der Grafiktreiber **GT** umfasst eine Recheneinheit **RE** zur Steuerung des Verfahrensablaufs und zur Modusauswahl. Je nach ermittelter Betrachterposition wird ein Multiplexschema **MUXᵢ** ausgewählt und der aktuelle Subpixelauszug **SBA** erstellt und in einem Multiplexspeicher **MUX-Buffer** gespeichert. Dieser wird auf dem Matrixbildschirm **MB** mit einem vorgesetzten Trennraster **TR** dargestellt.

In der **Figur 9** ist ein Schnitt durch ein Trennraster **TR** vor dem Matrixbildschirm **MB** mit schrägen Trennstreifen **TRS** und einer Überdeckung von vier Subpixel **SP** in drei unterschiedlichen Schaltzuständen dargestellt. Dabei ist das Trennraster **TR** bezüglich der aktuell angesteuerten und geöffneten Trennstreifen **TRS** elektronisch ansteuerbar. Die obere Ansicht zeigt das Trennraster **TR** mit einer Aktivierung der Trennstreifen **TRS** mit der Periode für den autostereoskopischen Betrieb für einen Nutzer. Die mittlere Ansicht zeigt die gleiche Anordnung mit einer Aktivierung einer gleichen Periode von Trennstreifen **TRS,** die jedoch seitlich um die halbe Breite eines Subpixels **SP** gegenüber der Struktur der Subpixels **SP** des Matrixbildschirms **MB** versetzt ist (Doppelpfeil). Durch diese Maßnahme wird das Feintracking bis in den Sub-Subpixelbereich hinein fortgesetzt. Die richtige Zuordnung des Bildinhaltes wird durch die Benutzung des richtigen Subpixelauszuges **SPA** erreicht. Dabei bleibt die Auswahl erhalten, wenn der Nutzer keine oder nur sehr geringe Kopfbewegungen ausführt. Bei einem erforderlichen Ausgleich von Kopfbewegung in die entgegen gesetzte Richtung wäre ein anderer Subpixelauszug zu wählen. Die untere Ansicht zeigt wieder die Aktivierung des ursprünglichen Rasters gemäß der linken Ansicht aus **Figur 9****.** Es wurde jedoch die linke und rechte Betrachtungszone noch weiter nach rechts verlagert. Dazu wurde ein Subpixelauszug **SPA** verwendet, bei dem die Subpixel **SP** des linken und rechten Bildes um eine Subpixelposition versetzt sind. Nicht erläuterte Bezugszeichen sind den vorhergehenden Figuren zu entnehmen.

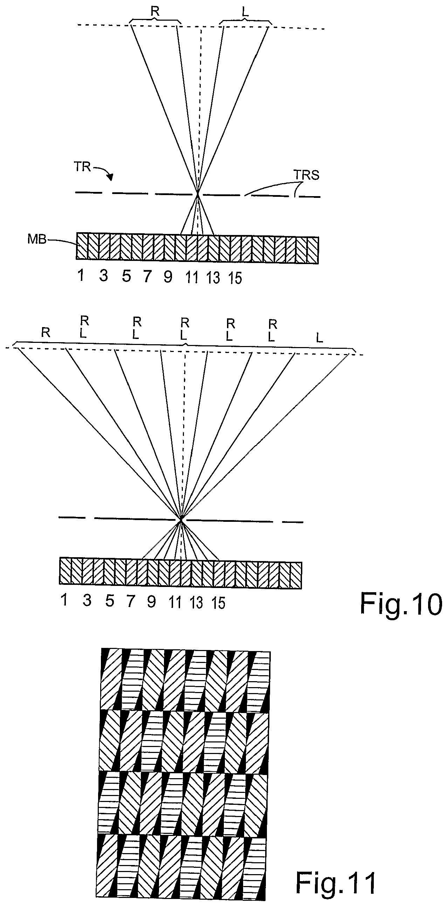

**Figur 10** zeigt ein Trennraster **TR** mit Trennstreifen **TRS**, in welchem in der oberen Ansicht die Trennstreifen für den Betrieb durch einen einzelnen Nutzer realisiert wurde. In der unteren Ansicht ist hingegen jeder zweite Trennstreifen **TRS** geschlossen. In diesem Modus kann hinter den verbleibenden geöffneten Trennstreifen **TRS** entsprechend der Anzahl der vorhandenen Subpixel **SP**, die wiederum mit der Anzahl der einzelnen Ansichten übereinstimmt, eine Parallaxbetrachtung aus verschiedenen Bildansichten für mehrere Betrachter realisiert werden. Jedes Subpixel **SP** enthält eine Farbinformation aus zueinander eine seitliche Disparität aufweisenden Ansichten, wobei die Adresse des Subpixels **SP** im Matrixbildschirm **BM** der aus dem Subpixelauszug **SPA** der jeweiligen Ansicht entspricht.

Figur 11 zeigt ein Beispiel, das das Verständnis der Erfindung erleichtert.

In der **Figur 11** sind Subpixel **SP** mit einer doppelten Abschrägung **AS** in den Ecken entlang des schrägen Trennrasters **TR** dargestellt. Es wurden die Abschrägungen **AS** in den Subpixeln **SP** teilweise umgruppiert, um das Übersprechen zwischen den Subpixelsets **SP-Set L, SP-Set R** zu reduzieren. Die optimale Anpassung der doppelt abgeschrägten Subpixel **SP** an das schräge Trennraster **TR** ist gut zu erkennen.

### Bezugszeichenliste

- **α**: Anstiegswinkel von TR
- **a**: Breitseite von SP, Variante a mit 4 SP
- **API**: Anwenderschnittstelle
- **AS**: Abschrägung
- **b**: Schmalseite von SP, Variante b mit 6 SP
- **BZ**: Bildzeile
- **D**: Abstand TR-MB
- **GK**: Grafikkarte
- **GT**: Grafiktreiber
- **KS**: Kamerasignal
- **L**: linke Bildansicht, linkes Auge
- **LB**: Linsenbreite
- **L-Buffer**: linker Speicher
- **MB**: Matrixbildschirm
- **MTV**: Multiplex-Track-Verfahren
- **MUXᵢ**: Multiplexschema
- **MUX-Buffer**: Multiplexspeicher
- **nP**: ganze Pixelzahl
- **P**: Pixel
- **PT**: Pupillentracker
- **R**: rechte Bildansicht, rechtes Auge
- **R-Buffer**: rechter Speicher
- **RE**: Recheneinheit
- **SP**: Subpixel
- **SPA**: Subpixelauszug
- **SP-Set L**: linkes Subpixelset
- **SP-Set R**: rechtes Subpixelset
- **SVK**: Stereo-Videokamera
- **TE**: Trennelement
- **TR**: Trennraster
- **TRS**: Trennstreifen
- **TS**: Trackingsystem
- **ZL**: Zylinderlinse

## Patentansprüche

1. Verfahren zur autostereoskopischen Erzeugung von dreidimensionalen Bildinformationen aus gerasterten Subpixelauszügen (SPA) aus zumindest einer rechten und einer linken Bildansicht (L, R) auf einem farbzugeordnete Subpixel (SP) in Bildzeilen (BZ) aufweisenden Matrixbildschirm (MB) mit einem optischen Trennraster (TR), bei dem
- Subpixel (SP) der rechten Bildansicht (R) in einem rechten Speicher (R-Buffer) Adressen zugeordnet werden, die Bildkoordinaten in der rechten Bildansicht (R) entsprechen, und Subpixel (SP) der linken Bildansicht (L) in einem linken Speicher (L-Buffer) Adressen zugeordnet werden, die Bildkoordinaten in der linken Bildansicht (L) entsprechen,
- wobei eine aktuelle Augenposition zumindest eines Betrachters bestimmt wird und
- ein aktueller Subpixelauszugs (SPA) gebildet wird, der auf dem Matrixbildschirm (MB) wiedergegeben wird, wobei die wiedergegebene Bildinformation elektronisch der aktuellen Augenposition nachgeführt wird, indem der aktuelle Subpixelauszug (SPA) in Abhängigkeit von der bestimmten Augenposition derart gebildet wird, dass Subpixel (SP) der linken Bildansicht (L) einer für ein linkes Auge des Betrachters sichtbaren Auswahl von Subpixeln (SP-Set L) des Matrixbildschirms (MB) zugewiesen werden und Subpixel (SP) der rechten Bildansicht) (R) einer für ein rechtes Auge des Betrachters sichtbaren Auswahl von Subpixel (SP-Set R) des Matrixbildschirms (MB) zugewiesen werden,
**dadurch gekennzeichnet,**
**dass** die Adressen der Subpixel (SP), welche aus dem rechten und linken Speicher (R-Buffer, L-Buffer) in den aktuellen Subpixelauszug (SPA) aufgenommen werden, im aktuellen Subpixelauszug (SPA) beibehalten werden, so dass die Bildkoordinaten jedes in den Subpixelauszug (SPA) aufgenommenen Subpixels (SP) in der linken bzw. rechten Bildansicht mit Bildschirmkoordinaten des zu dessen Wiedergabe verwendeten Subpixels (SP) im Matrixbildschirm (MB) identisch sind, während die Bildschirmkoordinaten der für das linke Auge des Betrachters sichtbaren Auswahl von Subpixeln (SP-Set L) und die Bildschirmkoordinaten der für das rechte Auge des Betrachters sichtbaren Auswahl von Subpixeln (SP-Set R) von der aktuellen Augenposition abhängen,
- wobei eine Periodizität (LB) von Trennelementen (TE) des Trennrasters (TR) in horizontaler Richtung a) vier oder b) sechs Subpixeln (SP) entspricht und
- die Trennelemente (TR) mit einem dem kleinen Seitenverhältnis der Subpixel (SP) entsprechenden Anstieg (α) schräg zur Matrix des Bildschirms (MB) verlaufen, der in zyklisch alternierender Folge angeordnete vertikale Farbstreifen aus blauen Subpixeln (SP), grünen Subpixeln (SP) und roten Subpixeln (SP) aufweist,
wobei das Verfahren ferner **gekennzeichnet ist durch**
- einen **durch** die bestimmte aktuelle Augenposition bedingten Start des Subpixelauszugs auf dem ersten bis a) vierten oder b) sechsten Subpixel (SP) in einer ausgewählten Bildzeile (BZ) des Matrixbildschirms (MB) unterhalb des ersten Trennelements (TE)
- und eine in jeder einzelnen Bildzeile jeweils alternierende Anordnung von a) zwei oder b) drei benachbarten Subpixeln (SP) aus dem rechten Speicher (R-Buffer) unmittelbar neben a) zwei oder b) drei benachbarten Subpixeln (SP) aus dem linken Speicher (L-Buffer),
- wobei bei der Anordnung ein bildzeilenweiser Versatz von einem Subpixel (SP) in Anstiegsrichtung (α) des Trennrasters (TR) und eine Anpassung im Randbereich des Matrixbildschirms (BM) vorgenommen wird.

2. Verfahren nach Anspruch 1,
**gekennzeichnet durch** eine Vorgabe von a) vier oder b) sechs verschiedenen Multiplexschemata (MUXᵢ), beginnend bei dem ersten bis a) vierten oder b) sechsten Subpixel (SP) in der ausgewählten Bildzeile (BZ), für die Bildung des aktuellen Subpixelauszugs (SPA) in Abhängigkeit von der bestimmten aktuellen Augenposition.

3. Verfahren nach Anspruch 1,
**gekennzeichnet durch** eine Vorgabe von drei verschiedenen Multiplexschemata (MUXᵢ), beginnend bei dem ersten, zweiten oder dritten Subpixel (SP) in der ausgewählten Bildzeile (BZ), und einem ganzzahligen Pixelsprung (NP) für die Bildung des aktuellen Subpixelauszugs (SPA) in Abhängigkeit von der bestimmten aktuellen Augenposition.

4. Verfahren nach einem der Ansprüche 1 bis 3,
**gekennzeichnet durch** eine Auswahl der ersten Bildzeile (BZ) für den Beginn des vorgegebenen Multiplexschemas (MUXᵢ).

5. Verfahren nach einem der Ansprüche 1 bis 4,
**gekennzeichnet durch** eine Bestimmung der aktuellen Augenposition **durch** Einbeziehung eines Trackingverfahrens zum Auffinden von Kopf- oder Augendetails des zumindest einen Betrachters.

6. Verfahren nach Anspruch 5,
**gekennzeichnet durch** ein videobasiertes Trackingverfahren.

7. Verfahren nach Anspruch 5 oder 6,
**gekennzeichnet durch** eine dynamische Änderung der Aufnahmeeinstellung für die Bildansichten (R, L) in Abhängigkeit von der vom Trackingverfahren bestimmten aktuellen Augenposition.

8. Verfahren nach einem der Ansprüche 1 bis 7,
**gekennzeichnet durch** eine dynamische Ablage der Bildansichten (R, L) aus einem Stereovideodatenformat für Bewegtbilder.

9. Verfahren nach einem der Ansprüche 1 bis 8,
**gekennzeichnet durch** eine automatische Anpassung der Auflösung der Bildansichten (R, L) an die Auflösung des Matrixbildschirms (MB).

10. Verfahren nach einem der Ansprüche 1 bis 9,
**gekennzeichnet durch** eine Abstandsveränderbarkeit des Trennrasters (TR) zum Matrixbildschirm (MB).

11. Verfahren nach einem der Ansprüche 1 bis 10,
**gekennzeichnet durch** eine Ansteuerung des Trennrasters (TR) zur Aktivierung oder Sperrung der einzelnen Trennelemente (TE).

12. Verfahren nach Anspruch 11,
**gekennzeichnet durch** eine alternierende Ansteuerung zwischen den Trennelementen (TE) in der vorgegebenen Periodizität und Trennelementen (TE) in einer weiteren Periodizität, die zu der vorgegebenen Periodizität gleich ist, aber einen seitlichen Versatz von einer halben Breite eines Subpixels (SP) aufweist.

13. Verfahren nach einem der Ansprüche 1 bis 12,
**gekennzeichnet durch** eine Aufteilung der rechten Bildansicht (R) in eine erste rechte und eine zweite rechte Bildansicht (R1, R2) und eine Aufteilung der linken Bildansicht (L) in erste linke und eine zweite linke Bildansicht (L1, L2), eine Ablage der Adressen der Subpixel (SP) der ersten und zweiten rechten Bildansicht (R1, R2) in einem ersten und zweiten rechten Speicher und der ersten und zweiten linken Bildansicht (L1, L2) in einem ersten und zweiten linken Speicher, eine Bildung des aktuellen Subpixelauszugs (SPA) **durch** fortschreitend bildzeilenweise alternierende Anordnung von a) zwei oder b) drei benachbarten Subpixel (SP) aus jeweils beiden rechten oder linken Bildansichten (R1/R2, L1/L2) und eine Einbeziehung eines Trackingverfahrens zum Auffinden von Kopf- oder Augendetails von zwei Betrachtern, wobei jedem Betrachter immer eine rechte und eine linke Bildansicht (R1/L1, R2/L2) zugeordnet wird.

14. Verfahren nach einem der Ansprüche 1 bis 12,
**gekennzeichnet durch** eine Aufteilung der rechten Bildansicht in eine erste, zweite und dritte rechte Bildansicht und eine Aufteilung der linken Bildansicht in erste, zweite und dritte linke Bildansicht, eine Ablage der Adressen der Subpixel der ersten, zweiten und dritten rechten Bildansicht in einem ersten, zweiten und dritten rechten Speicher und der ersten, zweiten und dritten linken Bildansicht in einem ersten, zweiten und dritten linken Speicher, eine Bildung des aktuellen Subpixelauszugs **durch** fortschreitend bildzeilenweise alternierende Anordnung von a) zwei oder b) drei benachbarten Subpixel aus jeweils den drei rechten oder linken Bildansichten und eine Einbeziehung eines Trackingverfahrens zum Auffinden von Kopf- oder Augendetails von drei Betrachtern, wobei jedem Betrachter immer eine rechte und eine linke Bildansicht zugeordnet wird.

15. Verfahren nach Anspruch 4 und 13 oder 14,
**gekennzeichnet durch** ein manuelles oder automatisches Umschalten des Trackingverfahrens zwischen dem Tracken von einem, zwei oder drei Betrachtern in Abhängigkeit von der Entfernung des vordersten Betrachters zum Matrixbildschirm (MB).

16. Verfahren nach Anspruch 15,
**gekennzeichnet durch** einen zusätzlichen Modus zur trackingfreien Multiview-Darstellung aus N-Bildansichten, insbesondere mit N=8, und einem manuellen oder automatischen Umschalten zwischen der getrackten Stereoansicht für ein, zwei oder drei Betrachter und der ungetrackten Multiviewansicht für mehr als zwei Betrachter in Abhängigkeit von der Entfernung des vordersten Betrachters zum Matrixbildschirm (MB).

17. Anordnung zur autostereoskopischen Erzeugung von dreidimensionalen Bildinformationen aus gerasterten Subpixelauszügen (SPA) aus zumindest einer rechten und einer linken Bildansicht (L, R) mit
- einem farbzugeordnete Subpixel (SP) in Bildzeilen aufweisenden Matrixbildschirm (MB), bei dem die Subpixel (SP) in zyklisch alternierender Reihenfolge angeordnete vertikale Farbstreifen aus blauen Subpixeln (SP), grünen Subpixeln (SP) und roten Subpixeln (SP) bilden, und
- einem optischen Trennraster (TR), bei dem die Periodizität der Trennelemente (TE) in horizontaler Richtung a) vier oder b) sechs Subpixeln (SP) entspricht und die Trennelemente (TE) mit einem dem kleinen Seitenverhältnis der Subpixel (SP) entsprechenden Anstieg schräg zur Matrix des Bildschirms verlaufen, sowie mit
- zumindest einem rechten Speicher (R-Buffer), in dem Subpixel (SP) der rechten Bildansicht (R) Adressen zugeordnet sind, die Bildkoordinaten in der rechten Bildansicht (R) entsprechen, und
- einem linken Speicher (L-Buffer), in dem Subpixel (SP) der linken Bildansicht (L) Adressen zugeordnet sind, die Bildkoordinaten in der linken Bildansicht (L) entsprechen, sowie
- einem Multiplexspeicher (MUX-Buffer) zur Speicherung eines aktuell gebildeten Subpixelauszugs (SPA),
- einer Recheneinheit (RE) zur Bildung des aktuellen Subpixelauszugs (SPA) sowie zur Steuerung des Verfahrensablaufs und der einzelnen Anordnungskomponenten und
- zumindest einem Trackingsystem (TS) zum Auffinden von Kopf- oder Augendetails eines Betrachters,
wobei die Recheneinheit (RE) eingerichtet ist, die Anordnung zur Durchführung eines Verfahrens nach einem der Ansprüche 1 bis 16 anzusteuern.

18. Anordnung nach Anspruch 17,
**gekennzeichnet durch** ein videobasiertes Trackingsystem (TS).

19. Anordnung nach Anspruch 17 oder 18,
**gekennzeichnet durch** a) zwei oder b) drei Trackingsysteme (TS) zum Auffinden von Kopf- oder Augendetails von a) zwei oder b) drei Betrachtern.

20. Anordnung nach einem der Ansprüche 17 bis 19,
**gekennzeichnet durch** ein in seinem Abstand zum Matrixbildschirm (MB) veränderliches und/oder abnehmbares Trennraster (TR).

21. Anordnung nach einem der Ansprüche 17 bis 20,
**gekennzeichnet durch** eine Ausbildung des Trennrasters (TR) als Lentikularraster mit schräg zum Matrixbildschirm (MB) verlaufenden Zylinderlinsen (ZL) als Trennelemente (TE).

22. Anordnung nach einem der Ansprüche 17 bis 20,
**gekennzeichnet durch** eine Ausbildung des Trennrasters (TR) als Streifenraster mit schräg zum Matrixbildschirm (MB) verlaufenden Trennstreifen (TRS) als Trennelemente (TE).

23. Anordnung nach Anspruch 22,
**gekennzeichnet durch** eine steuerbare Aktivierbarkeit der Trennstreifen (TRS), wobei diese in zwei Gruppen mit gleichen Periodizitäten mit einem Versatz von einer halben Breite eines Subpixel (SP) zueinander angeordnet sind.

24. Anordnung nach einem der Ansprüche 17 bis 23,
**gekennzeichnet durch** eine in Richtung des schrägen Trennrasters (TR) verlaufende, ein- oder beidseitige Abschrägung (AS) der Subpixel (SP).

## Claims

1. A method for the autostereoscopic production of three-dimensional picture information from gridded subpixel excerpts (SPA) from at least one right and one left picture view (L, R), on a matrix screen (MB) with an optical separating grid (TR) and comprising colour-assigned subpixels (SP) in picture lines (BZ), with which
- subpixels (SP) of the right picture view (R) in a right memory (R-Buffer) are assigned to addresses corresponding to picture coordinates in the right picture view (R), and subpixels (SP) of the left picture view (L) in a left memory (L-Buffer) are assigned to addresses corresponding to picture coordinates in the left picture view (L),
- wherein a current eye position of at least one viewer is determined and
- a current subpixel excerpt (SPA) is formed and reproduced on the matrix screen (MB), wherein the reproduced picture information is electronically tracked to the current eye position, by way of the current subpixel excerpt (SPA) being formed in dependence on the determined eye position, in a manner such that subpixels (SP) of the left picture view (L) are assigned to a selection of subpixels (SP-Set L) of the matrix screen (MB), said selection being visible to a left eye of the viewer, and subpixels of the right picture view (R) are assigned to a selection of subpixels (SP-Set R) of the matrix screen (MB), said selection being visible to a right eye of the viewer,
**characterised in that** the addresses of the subpixels (SP) which are received into the current pixel excerpt (SPA) from the right and left memory (R-buffer, L-buffer) are retained in the current subpixel excerpt (SPA), so that the picture coordinates of each subpixel (SP) which is received into the subpixel excerpt (SPA) in the left and right picture view respectively are identical to the screen coordinates of the subpixel (SP) in the matrix screen (MB), said latter subpixel being used for the reproduction of the received subpixel, whilst the screen coordinates of the selection of subpixels (SP-Set L) which is visible to the left eye of the viewer and the screen coordinates of the selection of subpixels (SP-Set R) which is visible to the right eye of the viewer, depend on the current eye position,
- wherein a periodicity (LB) of separating elements (TE) of the separating grid (TR) in the horizontal direction corresponds to a) four or b) six subpixels (SP) and
- the separating elements (TR) run obliquely to the matrix of the screen (MB) with a gradient (α) which corresponds to the small aspect ratio of the subpixels (SP), said screen comprising vertical colour strips of blue subpixels (SP), green subpixels (SP) and red subpixels (SP), said colour strips being arranged in a cyclically alternating sequence,
wherein the method is further **characterised by**
- a start of the subpixel excerpt at the first to a) fourth or b) sixth subpixel (SP) in a selected picture line (BZ) of the matrix screen (MB) below the first separating element (TE), said start being dependent on the determined, current eye position,
- and an arrangement which alternates in each case in each individual picture line, of a) two or b) three adjacent subpixels (SP) from the right memory (R-buffer), directly next to a) two or b) three adjacent subpixels (SP) from the left memory (L-buffer),
- wherein a picture-line-wise offset of one subpixel (SP) in the gradient direction (α) of the separating grid (TR), and an adaptation in the edge region of the matrix screen (BM) is carried out with regard to the arrangement.

2. A method according to claim 1,
**characterised by** a setting of a) four or b) six different multiplex schemes (MUXᵢ), beginning at the first to a) fourth or b) sixth subpixel (SP) in the selected picture line (BZ), for forming the current subpixel excerpt (SPA) in dependence on the determined, current eye position.

3. A method according to claim 1,
**characterised by** a setting of three different multiplex schemes (MUXᵢ), beginning at the first, second or third subpixel (SP) in the selected picture line (BZ), and of an integer pixel jump (NP) for the formation of the current subpixel excerpt (SPA) in dependence on the determined current eye position.

4. A method according to one of the claims 1 to 3,
**characterised by** a selection of the first picture line (BZ) for the beginning of the predefined multiplex scheme (MUXᵢ).

5. A method according to one of the claims 1 to 4,
**characterised by** a determining of the current eye position by way of incorporating a tracking method for locating the head details or eye details of the at least one viewer.

6. A method according to claim 5,
**characterised by** video-based tracking method.

7. A method according to claim 5 or 6,
**characterised by** a dynamic change of the receiving setting for the picture views (R, L), in dependence on the current eye position determined by the tracking method.

8. A method according to one of the claims 1 to 7,
**characterised by** a dynamic storage of the picture views (R, L) from a stereo video data format for moved pictures.

9. A method according to one of the claims 1 to 8,
**characterised by** an automatic adaptation of the resolution of the picture views (R, L) to the resolution of the matrix screen (MB).

10. A method according to one of the claims 1 to 9,
**characterised by** a distance changeability of the separating grid (TR) to the matrix screen (MB).

11. A method according to one of the claims 1 to 10,
**characterised by** an activation of the separating grid (TR) for activation or blocking the individual separating elements (TE).

12. A method according to claim 11,
**characterised by** an alternating activation between the separating elements (TE) in the predefined periodicity and separating elements (TE) in a further periodicity which is equal to the predefined periodicity, but has a lateral offset of half a width of a subpixel (SP).

13. A method according to one of the claims 1 to 12,
**characterised by** a division of the right picture view (R) into a first right and second right picture view (R1, R2), and a division of the left picture view (L) into a first left and a second left picture view (L2, L2), a storage of addresses of the subpixels (SP) of the first and second right picture view (R1, R2) in a first and second right memory and of the first and second left picture view (L1, L2) in a first and second left memory, a formation of the current subpixel excerpt (SPA) by way of a progressing, picture line by picture line, alternating arrangement of a) two or b) three adjacent subpixels (SP) from both right or left picture views (R1/R2, L1/ L2) in each case and an inclusion of a tracking method for locating head details or eye details of two viewers, wherein a right and a left picture view (R1/L1, R2/L2) is always assigned to each viewer.

14. A method according to one of the claims 1 to 12,
**characterised by** a division of the right picture view into a first, second and third right picture view, and a division of the left picture view into a first, second and third left picture view, a storage of addresses of the subpixels of the first, second and third right picture view in a first, second and third right memory and of the first, second and third left picture view in a first, second and third left memory, a formation of the current subpixel excerpt by way of a progressing, picture line by picture line, alternating arrangement of a) two or b) three adjacent subpixels from the three right or left picture views in each case, and an inclusion of a tracking method for locating head details or eye details of three viewers, wherein a right and a left picture view is always assigned to each viewer.

15. A method according to claim 4 and 13 or 14,
**characterised by** a manual or automatic switch-over of the tracking method between the tracking of one, two or three viewers, in dependence on the distance of the frontmost viewer to the matrix screen (MB).

16. A method according to claim 15,
**characterised by** an additional mode for the tracking-free, multi-view representation from N picture views, in particular with N=8, and a manual or automatic switch-over between the tracked stereo-view for one, two or three viewers and the untracked multiview view for more than two viewers, in dependence on the distance of the frontmost viewer to the matrix screen (MB).

17. An arrangement for the autostereoscopic production of three-dimensional picture information from gridded subpixel excerpts (SPA) from at least one right and left picture view (L R) with
- a matrix screen (MB) comprising colour-assigned subpixels (SP) in picture lines, with which the subpixels (SP) form vertical colour strips which are arranged in a cyclically alternating sequence and are of blue subpixels (SP), green subpixels (SP) and red subpixels (SP), and
- an optical separating grid (TR), with which the periodicity of the separating elements (TE) in the horizontal direction corresponds to a) four or b) six subpixels (SP) and the separating elements (TE) run obliquely to the matrix of the screen with an gradient corresponding to the small aspect ratio of the subpixels (SP), as well as with
- at least one right memory (R-buffer), in which subpixels (SP) of the right picture view (R) are assigned to addresses corresponding to picture coordinates in the right picture view (R), and
- a left memory (L-buffer), in which subpixels (SP) of the left picture view (L) are assigned to addresses corresponding to picture coordinates in the left picture view (L), as well as
- with a multiplex memory (MUX-Buffer) for storing a currently formed subpixel excerpt (SPA),
- a computation unit (RE) for forming the current subpixel excerpt (SPA) as well as for controlling the course of the method and the individual arrangement components, and
- at least one tracking system (TS) for locating head details or eye details of a viewer, wherein the computation unit (RE) is configured to activate the arrangement for carrying out a method according to one of the claims 1 to 16

18. An arrangement according to claim 17,
**characterised by** a video-based tracking system (TS).

19. An arrangement according to claim 17 or 18,
**characterised by** a) two or b) three tracking systems (TS) for locating head or eye details of a) two or b) three viewers.

20. An arrangement according to one of the claims 17 to 19,
**characterised by** a separating grid (TR) which is changeable in its distance to the matrix screen (MB) and/or which is removable.

21. An arrangement according to one of the claims 17 to 20,
**characterised by** a design of the separating grid (TR) as lenticular grids with cylinder lenses (ZL) running obliquely to the matrix screen (MB), as separating elements (TE).

22. An arrangement according to one of the claims 17 to 20,
**characterised by** a formation of the separating grid (TR) as a strip grids with separating strips (TRS) running obliquely to the matrix screen (MB), as separating elements (TE).

23. An arrangement according to claim 22,
**characterised by** a controllable activatability of the separating strips (TRS), wherein these are arranged in two groups with equal periodicities with an offset to one another of half the width of a subpixel (SP).

24. An arrangement according to one of the claims 17 to 23,
**characterised by** a slanting (AS) of the subpixels (SP) at one or both sides, said slanting running in the direction of the oblique separating grid (TR).

## Revendications

1. Procédé pour la création auto-stéréoscopique d'informations graphiques tridimensionnelles à partir d'extraits de sous-pixels tramés (SPA) provenant d'au moins une vue d'image gauche et une vue d'image droite (L, R) sur en un écran matriciel (MB) comprenant des sous-pixels à couleurs attribuées (SP) lignes d'images (BZ) avec une trame de séparation optique (TR), dans lequel :
- des sous-pixels (SP) de la vue d'image droite (R) sont attribuées, dans une mémoire droite (R-Buffer), à des adresses qui correspondent aux coordonnées graphiques dans la vue d'image droite (R) et des sous-pixels (SP) de la vue d'image gauche (L) sont attribuées, dans une mémoire gauche (L-Buffer), à des adresses qui correspondent aux coordonnées graphiques dans la vue d'image gauche (L),
- une position actuelle de l'oeil d'au moins un observateur étant déterminée et
- un extrait de sous-pixels (SPA) actuel est formé, qui est reproduit que l'écran matriciel (MB), l'information graphique reproduite étant asservie électroniquement à la position actuelle de l'oeil, grâce au fait que l'extrait de sous-pixels (SPA) actuel est formé en fonction de la position déterminée de l'oeil de façon à ce que les sous-pixels (SP) de la vue d'image gauche (L) sont attribués à une sélection, visible pour un oeil gauche de l'observateur, de sous-pixels (SP-Set L) de l'écran matriciel (MB) et les sous-pixels (SP) de la vue d'image gauche (R) sont attribués à une sélection, visible pour un oeil droit de l'observateur, de sous-pixels (SP-Set R) de l'écran matriciel (MB),
**caractérisé en ce que**
les adresses des sous-pixels (SP), qui sont enregistrées à partir des mémoires droite et gauche (R-Buffer, L-Buffer) dans l'extrait de sous-pixels (SPA) actuel, sont conservées dans l'extrait de sous-pixels (SPA) actuel, de façon à ce que les coordonnées graphiques de chaque sous-pixel (SP) enregistré dans l'extrait de sous-pixels (SPA) dans les vues d'image gauche et droite sont identiques aux coordonnées graphiques du sous-pixel (SP) utilisé pour sa reproduction dans l'écran matriciel (MB), tandis que les coordonnées à l'écran de la sélection de sous-pixels (SP-Set L) visible pour l'oeil gauche de l'observateur et les coordonnées à l'écran de la sélection de sous-pixels (SP-Set R) visible pour l'oeil droit de l'observateur dépendent de la position actuelle de l'oeil,
- une périodicité (LB) d'éléments de séparation (TE) de la trame de séparation (TR) dans la direction horizontale correspond à a) quatre ou b) six sous-pixels (SP) et
- les éléments de séparation (TR) s'étendent avec une monttée (α) correspondant au petit rapport latéral des sous-pixels (SP) en oblique par rapport à la matrice de l'écran (MB), qui comprend, dans des bandes de couleurs verticales disposées dans une série cyclique alternée de sous-pixels bleus (SP), de sous-pixels verts (SP) et de sous-pixels rouges (SP),
le procédé étant en outre **caractérisé par**
- un départ, conditionné par la position actuelle de l'oeil, de l'extrait de sous-pixels sur le premier au a) quatrième ou b) au sixième sous-pixel (SP) dans une ligne d'image (BZ) sélectionnée de l'écran matriciel (MB) en dessous du premier élément de séparation (TE)
- et une disposition alternée dans chaque ligne d'image de a) deux ou b) trois sous-pixels (SP) adjacents à partir de la mémoire droite (R-Buffer) directement à proximité de a) deux ou b) trois sous-pixels (SP) adjacents à partir de la mémoire gauche (L-Buffer),
- étant effectué lors de la disposition, un décalage par ligne d'image d'un sous-pixel (SP) dans le sens de la montée (α) de la trame de séparation (TR) et une adaptation au bord de l'écran matriciel (BM).

2. Procédé selon la revendication 1,
**caractérisé par** une spécification de a) quatre ou b) six différents schémas de multiplexage (MUXᵢ), en commençant par le premier au a) quatrième ou b) au sixième sous-pixel (SP) dans la ligne d'image (BZ) sélectionnée, pour la formation de l'extrait de sous-pixels (SPA) actuel en fonction de la position actuelle de l'oeil déterminée.

3. Procédé selon la revendication 1,
**caractérisé par** une spécification de trois différents schémas de multiplexage (MUXᵢ), en commençant par le premier, le deuxième ou le troisième sous-pixel (SP) dans la ligne d'image (BZ) sélectionné, et un saut de pixel à nombre entier (NP) pour la formation de l'extrait de sous-pixels (SPA) actuel en fonction de la position actuelle de l'oeil déterminée.

4. Procédé selon l'une des revendications 1 à 3,
**caractérisé par** une sélection de la première ligne d'image (BZ) pour le début du schéma de multiplexage (MUXᵢ) prédéterminé.

5. Procédé selon l'une des revendications 1 à 4,
**caractérisé par** une détermination de la position actuelle de l'oeil par réalisation d'un procédé de tracking pour la localisation de détails de la tête ou des yeux de l'au moins un observateur.

6. Procédé selon la revendication 5,
**caractérisé par** un procédé de tracking basé sur la vidéo.

7. Procédé selon la revendication 5 ou 6,
**caractérisé par** une modification dynamique du réglage d'enregistrement pour des vues d'images (R, L) en fonction de la position actuelle de l'oeil déterminée par le procédé de tracking.

8. Procédé selon l'une des revendications 1 à 7,
**caractérisé par** un enregistrement dynamique des vues d'images (R, L) à partir d'un format de données vidéo stéréo pour des images en mouvement.

9. Procédé selon l'une des revendications 1 à 8,
**caractérisé par** une adaptation automatique de la résolution des vues d'images (R, L) à la résolution de l'écran matriciel (MB).

10. Procédé selon l'une des revendications 1 à 9,
**caractérisé par** une possibilité de modification de la distance entre la trame de séparation (TR) et l'écran matriciel (MB).

11. Procédé selon l'une des revendications 1 à 10,
**caractérisé par** une commande de la trame de séparation (TR) pour l'activation ou le blocage des différents éléments de séparation (TE).

12. Procédé selon la revendication 11,
**caractérisé par** une commande alternée entre les éléments de séparation (TE) dans la périodicité prédéterminée et les éléments de séparation (TE) dans une autre périodicité, qui est égale à la périodicité prédéterminée, mais qui présente un décalage temporel d'une demi-largeur d'un sous-pixel (SP).

13. Procédé selon l'une des revendications 1 à 12,
**caractérisé par** une division de la vue d'image droite (R) en une première et une deuxième vues d'images droites (R1, R2) et une division de la vue d'image gauche (L) en une première et une deuxième vues d'images gauches (L1, L2), un enregistrement des adresses des sous-pixels (SP) de la première et de la deuxième vues d'images droites (R1, R2) dans une première et une deuxième mémoires droites et de la première et la deuxième vues d'images gauches (L1, L2) dans une première et une deuxième vues d'images gauches (L1, L2) dans une première et une deuxième mémoires gauches, une formation de l'extrait de sous-pixels (SPA) actuel par disposition alternée par lignes d'images en progression de a) deux ou b) trois sous-pixels (SP) adjacents à partir des deux vues d'images droites ou gauches (R1/R2, L1/L2) et une intégration d'un procédé de tracking pour la recherche de détails de la tête et des yeux de deux observateurs, une vue d'image droite et une vue d'image gauche (R1/L1, R2/L2) étant toujours attribuée à chaque observateur.

14. Procédé selon l'une des revendications 1 à 12,
**caractérisé par** une division de la vue d'image droite en une première, une deuxième et une troisième vue d'image droite et une division de la vue d'image gauche en une première, une deuxième et une troisième vue d'image gauche, un enregistrement des adresses des sous-pixels de la première, de la deuxième et de la troisième vue d'image droite dans une première, une deuxième et une troisième mémoire droite et de la première, de la deuxième et de la troisième vue d'image gauche dans une première, une deuxième et une troisième mémoire gauche, une formation de l'extrait de sous-pixels actuel par une disposition alternée par lignes d'image en progression de a) deux ou b) trois sous-pixels adjacents à partir des trois vues d'images droites ou gauches et une intégration d'un procédé de tracking pour la recherche de détails de la tête ou des yeux de trois observateurs, une vue d'image droit et une vue d'image gauche étant toujours attribuées à chaque observateur.

15. Procédé selon la revendication 4 et 13 ou 14,
**caractérisé par** une commutation manuelle ou automatique du procédé de tracking entre la poursuite d'un, de deux ou de trois observateurs en fonction de l'éloignement de l'observateur le plus en avant par rapport à l'écran matriciel (MB).

16. Procédé selon la revendication 15,
**caractérisé par** un mode supplémentaire pour une représentation multi-vues sans tracking de N vues d'images, plus particulièrement avec N=8, et une commutation manuelle ou automatique entre la vue stéréo suivie pour un, deux ou trois observateurs et la vue multi-vues non suivie pour plus de deux observateurs en fonction de l'éloignement de l'observateur le plus en avant par rapport à l'écran matriciel (MB).

17. Dispositif pour la création auto-stéréoscopique d'informations graphiques tridimensionnelles à partir d'extraits de sous-pixels tramés (SPA) provenant d'au moins une vue d'image gauche et une vue d'image droite (L, R) avec
- un écran matriciel (MB) comprenant des sous-pixels à couleur attribuée (SP) dans lignes d'images (BZ), dans lequel les sous-pixels (SP) forment des bandes de couleurs verticales disposées de manière cyclique et alternée, constituées de sous-pixels bleus (SP), de sous-pixels (SP) verts et de sous-pixels (SP) rouges et
- une trame de séparation optique (TR) dans laquelle la périodicité des éléments de séparation (TE) dans la direction horizontale correspond à a) quatre ou b) six sous-pixels (SP) et les éléments de séparation (TE) s'étendant avec un une montée correspondant au petit rapport latéral des sous-pixels (SP) en oblique par rapport à la matrice de l'écran, ainsi qu'avec
- au moins une mémoire droite (R-Buffer), dans laquelle, aux sous-pixels (SP) de la vue d'image (R) sont attribuées des adresses qui correspondent aux coordonnées graphiques dans la vue d'image droite (R) et
- une mémoire gauche (L-Buffer) dans laquelle, aux sous-pixels (SP) de la vue d'image gauche (L) sont attribuées des adresses qui correspondent aux coordonnées graphiques dans la vue d'image gauche (L), ainsi que
- une mémoire à multiplexage (MUX-Buffer) pour l'enregistrement d'un extrait de sous-pixels (SPA) actuellement formé,
- une unité de calcul (RE) pour la formation de l'extrait de sous-pixels (SPA) actuel ainsi que pour la commande du procédé et des différents composants du dispositif et
- au moins un système de tracking (TS) pour la recherche des détails de la tête et des yeux d'un observateur,
l'unité de calcul (RE) étant conçue pour commander le dispositif pour la réalisation d'un procédé selon l'une des revendications 1 à 16.

18. Dispositif selon la revendication 17,
**caractérisé par** un système de tracking basé sur une vidéo (TS).

19. Dispositif selon la revendication 17 ou 18,
**caractérisé par** a) deux ou b) trois systèmes de traking (TS) pour la recherche de détails de la tête ou des yeux de a) deux ou b) trois observateurs.

20. Dispositif selon l'une des revendications 17 à 19,
**caractérisé par** une trame de séparation (TR) avec une distance variable par rapport à l'écran matriciel (MB) et/ou amovible.

21. Dispositif selon l'une des revendications 17 à 20,
**caractérisé par** une conception de la trame de séparation (TR) comme une trame lenticulaire avec des lentilles cylindriques (ZL) s'étendant en oblique par rapport à l'écran matriciel (MB) en tant qu'éléments de séparation (TE).

22. Dispositif selon l'une des revendications 17 à 20,
**caractérisé par** une conception de la trame de séparation (TR) comme une trame de bandes avec des bandes de séparation (TRS) s'étendant en oblique par rapport à l'écran matriciel (MB) en tant qu'éléments de séparation (TE).

23. Dispositif selon la revendication 22,
**caractérisé par** une possibilité d'activation contrôlée des bandes de séparation (TRS), celles-ci étant disposées entre elles en deux groupes avec des périodicités identiques avec un décalage d'une demi-largeur d'un sous-pixel (SP).

24. Dispositif selon l'une des revendications 17 à 23,
**caractérisé par** un chanfrein (AS) d'un seul côté ou bilatéral des sous-pixels (SP) s'étendant en direction de la trame de séparation oblique (TR).
